# EUROPEAN PATENT APPLICATION

(11) **EP 4 366 253 A1**
(43) Date of publication of application: **08.05.2024**
(21) Application number: 22852094.6
(22) Date of filing: 30.07.2022
(51) Int. Cl.: H04L 25/02

(54) **DATA PROCESSING METHOD AND APPARATUS**

(30) Priority: 04.08.2021 CN 202110892508
(71) Applicant: Huawei Technologies Co., Ltd., Longgang Shenzhen, Guangdong 518129 (CN)
(72) Inventor: ZHANG, Gongzheng, Shenzhen, Guangdong 518129 (CN); XU, Chen, Shenzhen, Guangdong 518129 (CN); WANG, Jian, Shenzhen, Guangdong 518129 (CN); LI, Rong, Shenzhen, Guangdong 518129 (CN); WANG, Jun, Shenzhen, Guangdong 518129 (CN)
(74) Representative: Pfenning, Meinig & Partner mbB
(86) International application number: PCT/CN2022/109296
(87) International publication number: WO 2023/011381

(57) **Abstract**

This application discloses a data processing method and an apparatus. The method includes: After obtaining first data, a first communication apparatus processes the first data based on a first parameter, to obtain a first transmission symbol, and sends the first transmission symbol to a second communication apparatus. Correspondingly, the second communication apparatus receives the first transmission symbol. The second communication apparatus processes the first transmission symbol based on the first parameter to obtain an input of a neural network, and processes the input by using the neural network to obtain a processing result. The first parameter is determined based on first accuracy and first channel information, the first channel information is information about a channel between the first communication apparatus and the second communication apparatus, and the first accuracy indicates accuracy of processing data by the neural network. The method provided in this application effectively improves radio resource utilization.

## Description

This application claims priority to Chinese Patent Application No. 202110892508.7, filed with the China National Intellectual Property Administration on August 4, 2021 and entitled "DATAPROCESSING METHOD AND APPARATUS", which is incorporated herein by reference in its entirety.

### TECHNICAL FIELD

This application relates to the field of communication technologies, and in particular, to a data processing method and an apparatus.

### BACKGROUND

In recent years, an artificial intelligence (artificial intelligence, AI) technology represented by a deep neural network (deep neural network, DNN) has made significant progress in fields such as machine vision and natural language processing, and is gradually popularized in real life. One of the main features of the DNN is numerical computation. To be specific, various types of data are embedded into real number space, and numerical operations such as convolution and matrix operations are performed for inference, training, or the like.

Generally, a wireless transmission design provides a data transmission service by using reliable transmission as a design criterion. For example, a physical layer may perform processing such as channel coding and modulation on an upper-layer bit stream to obtain processed data, and then transmit the processed data through an air interface. If channel quality (for example, a signal-to-noise ratio) is different, corresponding data transmission capacities are also different. Adaptive coding and modulation and an automatic repeat request mechanism can adapt to channels of different quality and provide a dynamic transmission rate. Specifically, a transmission performance indicator is mainly a packet error rate, and a transmission parameter (for example, a modulation and coding scheme (modulation and coding scheme, MCS)) is adjusted depending on channel quality according to requirements of maximizing a throughput or reliability.

In the foregoing wireless transmission method, error-free transmission is used as a target, and the packet error rate is used as a basis for adjusting the transmission parameter. However, as neural network processing has a main goal of accurate computation and has a good error tolerance capability, the error-free transmission may cause low radio resource utilization.

### SUMMARY

This application provides a data processing method and an apparatus, to effectively improve radio resource utilization.

According to a first aspect, an embodiment of this application provides a data processing method. The method includes:

A first communication apparatus obtains first data. The first communication apparatus processes the first data based on a first parameter to obtain a first transmission symbol, where the first parameter is determined based on first accuracy and first channel information, the first channel information is information about a channel between the first communication apparatus and a second communication apparatus, and the first accuracy indicates accuracy of processing data by a neural network in the second communication apparatus. The first communication apparatus sends the first transmission symbol to the second communication apparatus.

The first accuracy may alternatively be understood as accuracy of processing results output by the neural network for a plurality of times, an average of accuracy of processing results output by the neural network, or average performance of processing data by the neural network. For example, the average performance includes an average correctness percentage, average accuracy, mean average precision, or the like. That the first parameter is determined based on first accuracy and first channel information may alternatively be understood as that the first parameter is related to the first accuracy and the first channel information, or the first parameter is obtained based on the first accuracy and the first channel information. A parameter used by the first communication apparatus to process data is determined based on the first accuracy and the first channel information, so that the first communication apparatus may process the data according to a requirement of processing the data by the neural network. In this way, the first data is processed by fully using an accuracy requirement of processing the data by the neural network and channel quality, thereby improving radio resource utilization.

Generally, when data is transmitted by using a wireless transmission solution, neural network processing is performed only after the data transmission is completely correct. However, in the method provided in this embodiment of this application, the first communication apparatus may process the first data based on the first parameter, and the first parameter is determined based on the first accuracy and the first channel information. Therefore, when the first communication apparatus transmits data, the second communication apparatus may perform neural network processing on the data as long as processing on the data meets the first accuracy. This improves a case in which the data is retransmitted because correctness of the data transmission needs to be ensured, and effectively improves the radio resource utilization.

In a possible implementation, the first parameter includes a first transform coefficient, where the first transform coefficient indicates a dimension ratio of the first data to the first transmission symbol, or the first parameter includes a first modulation order and a first code rate.

The first transform coefficient indicates the dimension ratio of the first data to the first transmission symbol. For example, the quantity of elements in the first data and the quantity (for example, the quantity of first transmission symbols) of elements in the first transmission symbol may be used to represent the dimension ratio of the first data to the first transmission symbol. For example, a larger first transform coefficient indicates that fewer effective features are retained when the first communication apparatus processes the first data. Therefore, fewer transmission resources are used when the first transmission symbol is transmitted, causing lower first accuracy of processing the data by the neural network. For another example, when the channel information is the same (where for example, the channel quality is the same), a smaller first transform coefficient indicates a higher requirement of the first accuracy. For another example, when requirements of the first accuracy are the same, better channel quality indicated by the first channel information indicates a larger first transform coefficient.

Because the neural network has flexible tolerance for a data error, according to the foregoing method, a dynamic first transform coefficient and dynamic first accuracy can be supported in a large range of channel quality interval, thereby improving the radio resource utilization.

When the channel information is the same, a smaller first transform coefficient indicates higher first accuracy.

In a possible implementation, the first accuracy is represented by any one or more of the following: a confidence of the processing result of the neural network, classification precision of the processing result of the neural network, a mean squared error (mean squared error, MSE) between input data of the neural network and the first data, and a mean absolute error (mean absolute error, MAE) between the input data of the neural network and the first data.

In this embodiment of this application, the first accuracy may be represented by an average of confidences corresponding to a plurality of processing results of the neural network. Alternatively, the first accuracy may be represented by an average of probabilities corresponding to a plurality of processing results of the neural network. Alternatively, the first accuracy may be represented by an average of classification precision corresponding to a plurality of processing results of the neural network. The first accuracy may be represented by an average of MSEs between data that is input by the neural network for a plurality of times and real data, an average of root mean squared errors (root mean squared errors, RMSEs) between data that is input by the neural network for a plurality of times and real data, an average of MAEs between data that is input by the neural network for a plurality of times and real data, or the like. It may be understood that the representation manner of the first accuracy described herein is merely an example, and another type of output of the neural network is not limited in this embodiment of this application.

In a possible implementation, that the first communication apparatus processes the first data based on a first parameter includes: The first communication apparatus transforms the first data based on the first transform coefficient, to obtain the first transmission symbol. Alternatively, the first communication apparatus encodes and modulates the first data based on the first modulation order and the first code rate, to obtain the first transmission symbol.

In a possible implementation, the method further includes: The first communication apparatus sends a first request message to the second communication apparatus, where the first request message is for requesting the neural network to perform data processing, the first request message includes first indication information, and the first indication information indicates the first accuracy. The first communication apparatus receives a first response message from the second communication apparatus, where the first response message includes second indication information, and the second indication information indicates the first parameter.

In a possible implementation, the method further includes: The first communication apparatus receives a second request message from the second communication apparatus, where the second request message is for requesting data, the second request message includes third indication information, and the third indication information indicates the first parameter.

In a possible implementation, the method further includes: The first communication apparatus receives a feedback message from the second communication apparatus, where the feedback message includes information indicating the processing result.

In a possible implementation, the method further includes: The first communication apparatus receives retransmission indication information from the second communication apparatus, where the retransmission indication information indicates to retransmit the first data. The first communication apparatus retransmits the first data based on the retransmission indication information.

In a possible implementation, the retransmission indication information further indicates a second parameter, and the second parameter is a parameter obtained through updating of the first parameter.

In a possible implementation, one or more pieces of the following information are carried on a neural network processing control channel: the first indication information, the second indication information, the third indication information, or the retransmission indication information.

In a possible implementation, the first transmission symbol is carried on a neural network processing shared channel.

In this embodiment of this application, the neural network processing control channel and the neural network processing shared channel are designed depending on requirements of the neural network processing. When the first transmission symbol is transmitted on the neural network processing shared channel, even if an error occurs, the second communication apparatus may still process a received transmission symbol, thereby improving the radio resource utilization. Optionally, the neural network processing control channel and the neural network processing shared channel described in this embodiment of this application can not only be used for transmission of a parameter, data, or the like related to the neural network processing, but also for transmission of other data that does not require error-free transmission.

According to a second aspect, an embodiment of this application provides a data processing method. The method includes:

A second communication apparatus receives a first transmission symbol from a first communication apparatus. The second communication apparatus processes the first transmission symbol based on a first parameter to obtain an input of a neural network, where the first parameter is determined based on first accuracy and first channel information, the first channel information is information about a channel between the first communication apparatus and the second communication apparatus, and the first accuracy indicates accuracy of processing data by the neural network. The second communication apparatus processes the input by using the neural network to obtain a processing result.

In a possible implementation, the first parameter includes a first transform coefficient, where the first transform coefficient indicates a dimension ratio of first data to the first transmission symbol, or the first parameter includes a first modulation order and a first code rate.

When channel information is the same, a smaller first transform coefficient indicates higher first accuracy.

In a possible implementation, the first accuracy is represented by any one or more of the following: a confidence of the processing result of the neural network, classification precision of the processing result of the neural network, a mean squared error MSE between input data of the neural network and the first data, and a mean absolute error MAE between the input data of the neural network and the first data.

In a possible implementation, that the second communication apparatus processes the first transmission symbol based on a first parameter to obtain an input of a neural network includes: The second communication apparatus performs inverse transformation on the first transmission symbol based on the first transform coefficient, to obtain the input of the neural network. Alternatively, the second communication apparatus demodulates and decodes the first transmission symbol based on the first modulation order and the first code rate, to obtain the input of the neural network.

In a possible implementation, the method further includes: The second communication apparatus receives a first request message from the first communication apparatus, where the first request message is for requesting neural network processing, the first request message includes first indication information, and the first indication information indicates the first accuracy. The second communication apparatus sends a first response message to the first communication apparatus, where the first response message includes second indication information, and the second indication information indicates the first parameter.

In a possible implementation, the method further includes: The second communication apparatus sends a second request message to the first communication apparatus, where the second request message is for requesting data, the second request message includes third indication information, and the third indication information indicates the first parameter.

In a possible implementation, the method further includes: When second accuracy of the processing result of the input meets a preset condition, the second communication apparatus sends a feedback message to the first communication apparatus, where the feedback message includes information indicating the processing result.

In a possible implementation, the method further includes: When second accuracy of the processing result of the input does not meet a preset condition, the second communication apparatus sends retransmission indication information to the first communication apparatus, where the retransmission indication information indicates to retransmit the first data, and the first transmission symbol is obtained based on the first data.

In a possible implementation, the retransmission indication information further indicates a second parameter, and the second parameter is a parameter obtained through updating of the first parameter.

In a possible implementation, one or more pieces of the following information are carried on a neural network processing control channel: the first indication information, the second indication information, the third indication information, or the retransmission indication information.

In a possible implementation, the first transmission symbol is carried on a neural network processing shared channel.

It may be understood that for descriptions or beneficial effects of the second aspect, refer to the first aspect. Details are not described herein again.

According to a third aspect, an embodiment of this application provides a communication apparatus, configured to perform the method in any one of the first aspect or the possible implementations of the first aspect. The communication apparatus includes a corresponding unit that performs the method in any one of the first aspect or the possible implementations of the first aspect.

For example, the communication apparatus may be a first communication apparatus, a chip, or the like, and the chip may be used in (or referred to as being disposed in) the first communication apparatus.

According to a fourth aspect, an embodiment of this application provides a communication apparatus, configured to perform the method in any one of the second aspect or the possible implementations of the second aspect. The communication apparatus includes a corresponding method for performing the method in any one of the second aspect or the possible implementations of the second aspect.

For example, the communication apparatus may be a second communication apparatus, a chip, or the like, and the chip may be used in (or referred to as being disposed in) the second communication apparatus.

In the third aspect or the fourth aspect, the communication apparatus may include a transceiver unit and a processing unit. For specific descriptions of the transceiver unit and the processing unit, refer to apparatus embodiments described below.

According to a fifth aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a process of performing the foregoing method, a process related to sending in the foregoing method may be understood as a process of an output of the processor. For example, when the processor outputs data, the processor outputs the data to a transceiver, so that the transceiver transmits the data. After the data is output by the processor, other processing may further need to be performed before the data reaches the transceiver. Similarly, when the processor receives data that is input, the transceiver receives the data and inputs the data to the processor. Further, after the transceiver receives the data, other processing may need to be performed on the data before the data is input to the processor. It may be understood that the descriptions are also applicable to the sixth aspect described below.

Unless otherwise specified, or if operations such as transmitting, sending, and receiving related to the processor do not conflict with an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In an implementation process, the processor may be a processor specifically configured to perform these methods, or may be a processor, for example, a general-purpose processor, that executes computer instructions in the memory to perform these methods. The memory may be a non-transitory (non-transitory) memory, for example, a read-only memory (read-only memory, ROM). The memory and the processor may be integrated into a same chip, or may be separately disposed on different chips. A type of the memory and a manner of disposing the memory and the processor are not limited in this embodiment of this application. It may be understood that descriptions of the processor and the memory are also applicable to the sixth aspect described below, and details are not described below again.

In a possible implementation, the memory is located outside the communication apparatus.

In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes the transceiver, and the transceiver is configured to receive a signal or send a signal.

In this embodiment of this application, the communication apparatus may be a first communication apparatus, a chip, or the like, and the chip may be used in the first communication apparatus.

According to a sixth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes a transceiver, and the transceiver is configured to receive a signal or send a signal.

In this embodiment of this application, the communication apparatus may be a second communication apparatus, a chip, or the like, and the chip may be used in the second communication apparatus.

According to a seventh aspect, an embodiment of this application provides a communication apparatus. The communication apparatus includes a logic circuit and an interface, where the logic circuit is coupled to the interface. The interface is configured to input first data. The logic circuit is configured to process the first data based on a first parameter to obtain a first transmission symbol. The interface is further configured to output the first transmission symbol.

It may be understood that for descriptions of the first parameter, first accuracy, first channel information, and the like, refer to the descriptions of the first aspect or the second aspect, or refer to various embodiments described below. Details are not described herein again.

According to an eighth aspect, an embodiment of this application provides a communication apparatus. The communication apparatus includes a logic circuit and an interface, where the logic circuit is coupled to the interface. The interface is configured to input a first transmission symbol. The logic circuit is configured to: process the first transmission symbol based on a first parameter to obtain an input of a neural network, and process the input by using the neural network, to obtain a processing result.

It may be understood that for descriptions of the first parameter, first accuracy, first channel information, and the like, refer to the descriptions of the first aspect or the second aspect, or refer to various embodiments described below. Details are not described herein again.

According to a ninth aspect, an embodiment of this application provides a computer-readable storage medium. The computer-readable storage medium is configured to store a computer program. When the computer program is run on a computer, the method in any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method in any one of the second aspect or the possible implementations of the second aspect is performed.

According to an eleventh aspect, an embodiment of this application provides a computer program product. The computer program product includes a computer program or computer-executable instructions. When the computer program or the computer-executable instructions are run on a computer, the method in any one of the first aspect or the possible implementations of the first aspect is performed.

According to a twelfth aspect, an embodiment of this application provides a computer program product. The computer program product includes a computer program or computer-executable instructions. When the computer program or the computer-executable instructions are run on a computer, the method in any one of the second aspect or the possible implementations of the second aspect is performed.

According to a thirteenth aspect, an embodiment of this application provides a computer program. When the computer program is run on a computer, the method in any one of the first aspect or the possible implementations of the first aspect is performed.

According to a fourteenth aspect, an embodiment of this application provides a computer program. When the computer program is run on a computer, the method in any one of the second aspect or the possible implementations of the second aspect is performed.

According to a fifteenth aspect, an embodiment of this application provides a communication system. The communication system includes a first communication apparatus and a second communication apparatus. The first communication apparatus is configured to perform the method in any one of the first aspect or the possible implementations of the first aspect. The second communication apparatus is configured to perform the method in any one of the second aspect or the possible implementations of the second aspect.

### BRIEF DESCRIPTION OF DRAWINGS

FIG. 1 is a schematic diagram of a communication system according to an embodiment of this application;
FIG. 2 is a schematic diagram of interaction in a data processing method according to an embodiment of this application;
FIG. 3 is a schematic diagram of a relationship between first accuracy and a first signal-to-noise ratio according to an embodiment of this application;
FIG. 4 to FIG. 6 are schematic diagrams of interaction in data processing methods according to embodiments of this application;
FIG. 7a to FIG. 7d are schematic diagrams of frame structures according to embodiments of this application;
FIG. 8a is a schematic diagram of a channel corresponding to neural network processing according to an embodiment of this application;
FIG. 8b is a schematic diagram of a layer corresponding to neural network processing according to an embodiment of this application;
FIG. 8c is a schematic diagram of a channel corresponding to neural network processing according to an embodiment of this application;
FIG. 9a to FIG. 9c are schematic diagrams of scenarios of data processing methods according to embodiments of this application;
FIG. 10 is a schematic diagram of a simulation result according to an embodiment of this application; and
FIG. 11 to FIG. 13 are schematic diagrams of structures of communication apparatuses according to embodiments of this application.

### DESCRIPTION OF EMBODIMENTS

To make objectives, technical solutions, and advantages of this application clearer, the following further describes this application with reference to accompanying drawings.

In the specification, claims, and accompanying drawings of this application, terms such as "first" and "second" are only intended to distinguish between different objects but do not describe a particular order. In addition, terms such as "include", "have", and any other variant thereof are intended to cover non-exclusive inclusion. For example, a process, a method, a system, a product, a device, or the like that includes a series of steps or units is not limited to the listed steps or units, but optionally further includes an unlisted step, unit, or the like, or optionally further includes another inherent step or unit of the process, the method, the product, the device, or the like.

An "embodiment" mentioned in the specification means that a particular feature, structure, or characteristic described with reference to this embodiment may be included in at least one embodiment of this application. The phrase described in various locations in the specification may neither necessarily mean a same embodiment, nor mean an independent or optional embodiment exclusive from another embodiment. It may be explicitly and implicitly understood by a person skilled in the art that the embodiment described in the specification may be combined with another embodiment.

In this application, "at least one piece (item)" means one or more, "a plurality of" means two or more, and "at least two pieces (items)" means two, three, or more. "And/or" is for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof indicates any combination of these items. For example, at least one item (piece) of a, b, or c may represent a, b, c, "a and b", "a and c", "b and c", or "a, b, and c".

The method provided in this application may be applied to various communication systems. For example, the communication system may be an internet of things (internet of things, IoT) system, a narrow band internet of things (narrow band internet of things, NB-IoT) system, or a long term evolution (long term evolution, LTE) system, or may be a 5th-generation (5th-generation, 5G) communication system, a new communication system (for example, 6G) emerging in future communication development, or the like. In addition, the method provided in this application may be further applied to a wireless local area network (wireless local area network, WLAN) system, for example, wireless fidelity (wireless fidelity, Wi-Fi).

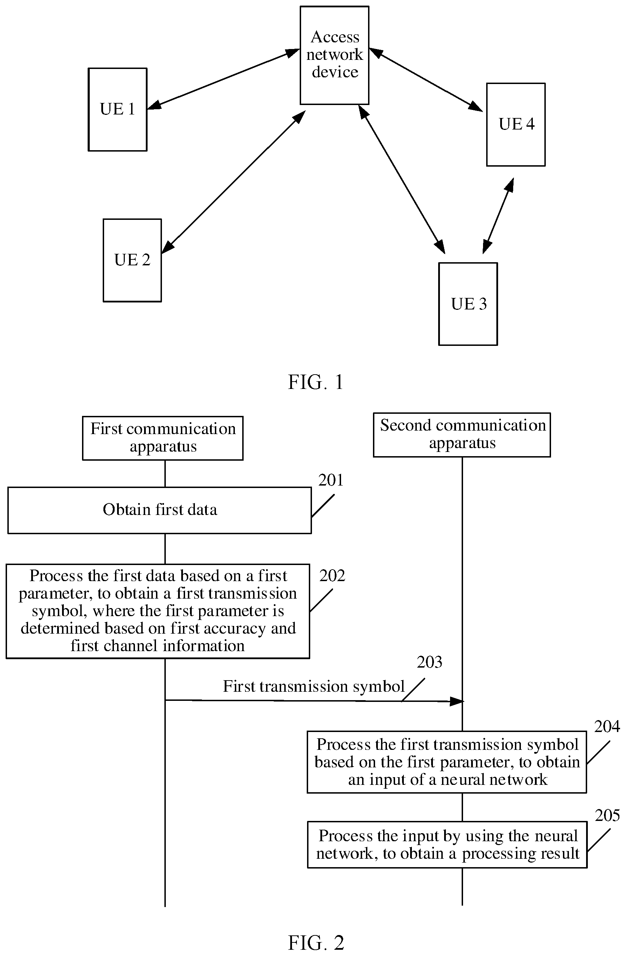

The technical solutions provided in this application may be further applied to machine type communication (machine type communication, MTC), a machine-to-machine communication long term evolution technology (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, internet of vehicles. A communication mode in an internet of vehicles system is collectively referred to as vehicle-to-everything (vehicle-to-everything, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. For example, in FIG. 1 shown below, a terminal device may communicate with another terminal device by using a D2D technology, an M2M technology, or a V2X technology.

FIG. 1 is a schematic diagram of a communication system according to an embodiment of this application. Method embodiments described below in this application may be applicable to the communication system shown in FIG. 1. Details are not described below again.

For example, the communication system may include at least one access network device and at least one terminal device.

For example, the access network device may be a next generation NodeB (next generation NodeB, gNB), a next generation evolved NodeB (next generation evolved NodeB, ng-eNB) (which may be briefly referred to as an eNB), an access network device in future 6G communication, or the like. The access network device may be any device with a wireless transceiver function, including but not limited to the base station described above. Alternatively, the base station may be a base station in a future communication system, for example, a 6th-generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may alternatively be a small cell, a transmission reception point (transmission reception point, TRP) (or may be referred to as a transmission point or a reception point), or the like. It may be understood that the access network device may alternatively be a base station in a future evolved public land mobile network (public land mobile network, PLMN), or the like.

For example, the terminal device may also be referred to as user equipment (user equipment, UE), a terminal, or the like. The terminal device is a device with a wireless transceiver function, and may be deployed on land, including an indoor or outdoor device, a handheld device, or a wearable or vehicle-mounted device, may be deployed on a water surface, for example, on a ship, or may be deployed in the air, for example, deployed on an airplane, a balloon, or a satellite. The terminal device may be a mobile phone (mobile phone), a pad (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may alternatively be a terminal device in a future 6G network, a terminal device in the future evolved PLMN, or the like.

It may be understood that the terminal device described in this application may not only include a vehicle (for example, an entire vehicle) in internet of vehicles, but also include a vehicle-mounted device, a vehicle-mounted terminal (including a telematics box (telematics box, T-box) or a host in an internet of vehicles system), or the like in the internet of vehicles. A specific form of the terminal device used in the internet of vehicles is not limited in this application. For ease of description, the following describes the method in this application by using an example in which the terminal device is a UE.

The communication system shown in FIG. 1 includes one access network device and four UEs, such as a UE 1 to a UE 4 in FIG. 1. For example, the UE 1, the UE 3, and the UE 4 may be mobile phones, and the UE 2 may be a vehicle or the like, or the UE 3 and the UE 4 are vehicles, and the UE 1 and the UE 2 are mobile phones or the like. It may be understood that for specific descriptions of the UE and the access network device, refer to the foregoing descriptions. Details are not described herein again. It should be understood that FIG. 1 shows examples of one access network device, four UEs, and communication links between communication devices. Optionally, the communication system may include a plurality of access network devices, and a coverage area of each access network device may include another quantity of UEs, for example, more or fewer UEs. This is not limited in this application. Optionally, the communication system shown in FIG. 1 may further include a core network device, for example, an access and mobility management function (access and mobility management function, AMF). This is not limited in this application.

Generally, in a wireless transmission design, reliable transmission is used as a design criterion. For example, when a first communication apparatus sends data to a second communication apparatus, if the second communication apparatus cannot correctly decode the data received by the second communication apparatus, the first communication apparatus needs to retransmit the data. After the second communication apparatus correctly decodes the data, the second communication apparatus performs neural network (neural network, NN) processing or the like on the data received by the second communication apparatus. However, because a neural network has a good error tolerance capability, the second communication apparatus may perform neural network processing without completely correctly receiving the data. In other words, the foregoing method in which the second communication apparatus performs neural network processing only after completely correctly receiving the data from the first communication apparatus causes low radio resource utilization.

In view of this, this application provides a data transmission method and an apparatus. Accuracy of processing data by the neural network in the second communication apparatus is used as an indicator of a transmission design, to determine a related parameter for processing data by the first communication apparatus. In this way, a tradeoff (where for example, a lower signal-to-noise ratio indicates lower accuracy, and therefore a requirement on a radio resource may be reduced by reducing the accuracy) between a data transmission error in different channel information and the accuracy of processing the data by the neural network can be fully used, thereby effectively improving radio resource utilization.

Before the method provided in this application is described, terms in this application are first described.

### 1. First accuracy

The first accuracy described in this application may indicate the accuracy of processing data by the neural network. Further, the first accuracy may indicate an average of accuracy of processing results output by the neural network. Alternatively, the first accuracy may indicate average performance of processing data by the neural network. For example, the average performance includes an average correctness percentage, average accuracy, mean average precision, or the like.

For example, an output of the neural network includes a processing result. The processing result may correspond to a processing type of the neural network. For example, if the processing type of the neural network includes a classification type, the processing result may be a category corresponding to an input of the neural network. For another example, if the processing type of the neural network includes pattern recognition, the processing result may be a pattern corresponding to the input of the neural network. Optionally, the output of the neural network further includes the accuracy of the processing result obtained by the neural network. The accuracy of the obtained processing result may be referred to as accuracy corresponding to the processing result. For example, for a classification task, an output may be a probability that an input belongs to each category, and a category corresponding to a largest probability is used as a processing result of the input. In this case, the accuracy of the processing result may be represented by a probability of a category corresponding to the output of the neural network. Optionally, an output probability predicted by the neural network may alternatively be a corrected probability. For example, an original output probability is corrected, so that the corrected probability is close to the accuracy. That is, the first accuracy may be expressed by the corrected probability. For another example, the output of the neural network may further include classification precision (precision), a confidence, or the like. The classification task is still used as an example. If probability distribution of the output of the neural network is centralized (or in other words, an entropy is small), it indicates that a confidence of the output is high. The classification precision indicates a proportion of results that are determined to be correct in the output.

Based on the foregoing descriptions, the first accuracy may be represented by an average of confidences corresponding to a plurality of processing results of the neural network. Alternatively, the first accuracy may be represented by an average of probabilities corresponding to a plurality of processing results of the neural network. Alternatively, the first accuracy may be represented by an average of classification precision corresponding to a plurality of processing results of the neural network. It may be understood that the confidence level, the classification precision, or the probability described above is merely an example, and the output of the neural network may further include another type, for example, a recall (recall) rate.

The output of the neural network described above may be understood as an example of a discrete output. However, in this application, the output of the neural network may further include another type of output. For example, the output of the neural network may be a result of channel estimation. For another example, the output of the neural network may alternatively be a numerical operation result or the like. For another example, the output of the neural network may alternatively be a parameter fusion result or the like. In this case, the first accuracy may be represented by an average of errors between data that is input by the neural network for a plurality of times and real data. In other words, the first accuracy may be represented by an average of errors of transmitted data. For example, the error includes a deviation between a receive gradient (that is, the input obtained by the neural network) of the neural network and a real gradient (that is, data sent by a transmit end). For another example, the error includes a deviation and the like between a fusion parameter and an original parameter in federated learning. For example, the error may include any one or more of the following: a mean squared error (mean squared error, MSE), a root mean squared error (root mean squared error, RMSE), or a mean absolute error (mean absolute error, MAE). In other words, the first accuracy may be represented by an average of MSEs between the data that is input by the neural network for the plurality of times and the real data, an average of RMSEs between the data that is input by the neural network for the plurality of times and the real data, an average of MAEs between the data that is input by the neural network for the plurality of times and the real data, or the like. It may be understood that the first accuracy described herein may be represented by a distance of feature space. The distance of the feature space is a distance between features, and the distance may be represented by any one or more of the following: the MSE, the RMSE, or the MAE.

### 2. Second accuracy

The second accuracy described in this application indicates the accuracy of the processing result output by the neural network. Based on different types of outputs of the neural network described above, for example, the second accuracy may be represented by the confidence level of the processing result, the second accuracy may be represented by the probability of the processing result (or the entropy of the probability), the second accuracy may be represented by the classification precision of the processing result, or the like. Alternatively, the second accuracy may be represented by the error between the data that is input by the neural network and the real data, and the error includes one or more of the following: the MSE, the RMSE, or the MSE.

In other words, the second accuracy may indicate accuracy of the processing result output by the neural network for a single time. The first accuracy may indicate accuracy of the processing results output by the neural network for a plurality of times.

It may be understood that the output of the neural network described above is merely an example, and another type of output of the neural network is not limited in this application.

FIG. 2 is a schematic flowchart of a data processing method according to an embodiment of this application. The method may be applied to a first communication apparatus and a second communication apparatus. The second communication apparatus may perform neural network processing on data from the first communication apparatus. In other words, the first communication apparatus may provide data for the second communication apparatus, and the second communication apparatus processes, by using a neural network, the data provided by the first communication apparatus. For example, the first communication apparatus may be a terminal device, and the second communication apparatus may be an access network device. Alternatively, the first communication apparatus is an access network device, and the second communication apparatus is a terminal device. Alternatively, both the first communication apparatus and the second communication apparatus may be terminal devices or the like. Specific forms of the first communication apparatus and the second communication apparatus are not limited in this embodiment of this application. It may be understood that for specific descriptions of the terminal device and the access network device, refer to FIG. 1. Details are not described herein again. As shown in FIG. 2, the method includes the following steps.

201: The first communication apparatus obtains first data.

The first data may be data to be processed by the first communication apparatus. Alternatively, the first data may be data to be sent to the second communication apparatus, or the like. For example, the first data may include original data obtained by the first communication apparatus. For example, the neural network in the second communication apparatus includes model forward inference. In this case, the first data may include any type of image data, voice data, or text data. For example, a complete neural network may be further split at a layer into two partial neural networks, such as a first partial neural network and a second partial neural network, to be separately deployed on the first communication apparatus and the second communication apparatus. For example, the first communication apparatus may perform partial processing on input data by using the first partial neural network to obtain an intermediate result, and then send the intermediate result to the second communication apparatus. After obtaining the intermediate result, the second communication apparatus may continue to process the intermediate result by using the second partial neural network, to obtain an inference result. In other words, the neural network in the second communication apparatus may include a partial-layer neural network, to be used for model forward inference. To be specific, the first data may include data that is obtained by the first communication apparatus and that is processed by the partial layer neural network. For example, the second communication apparatus may be used as a parameter server for federated learning, to fuse parameters such as weights updated by neural networks of a plurality of first communication apparatuses. In other words, the neural network in the second communication apparatus includes model fusion of the federated learning. To be specific, the first data may include a model parameter, intermediate gradient data, or the like obtained by the first communication apparatus.

It may be understood that a specific type of the first data may be determined based on a processing type of the neural network in the second communication apparatus. The specific type of the first data is not limited in this embodiment of this application. All data that can be processed by the neural network in the second communication apparatus falls within the protection scope of this embodiment of this application. A specific method for obtaining the first data by the first communication apparatus is not limited in this embodiment of this application.

202: The first communication apparatus processes the first data based on a first parameter, to obtain a first transmission symbol, where the first parameter is determined based on first accuracy and first channel information.

The first transmission symbol may be understood as a symbol that is obtained through the processing of the first communication apparatus on the first data and that can be used for transmission. For example, the first transmission symbol may include a modulation symbol, a coding symbol, a coding modulation symbol, or the like. A specific type of the first transmission symbol is not limited in this embodiment of this application.

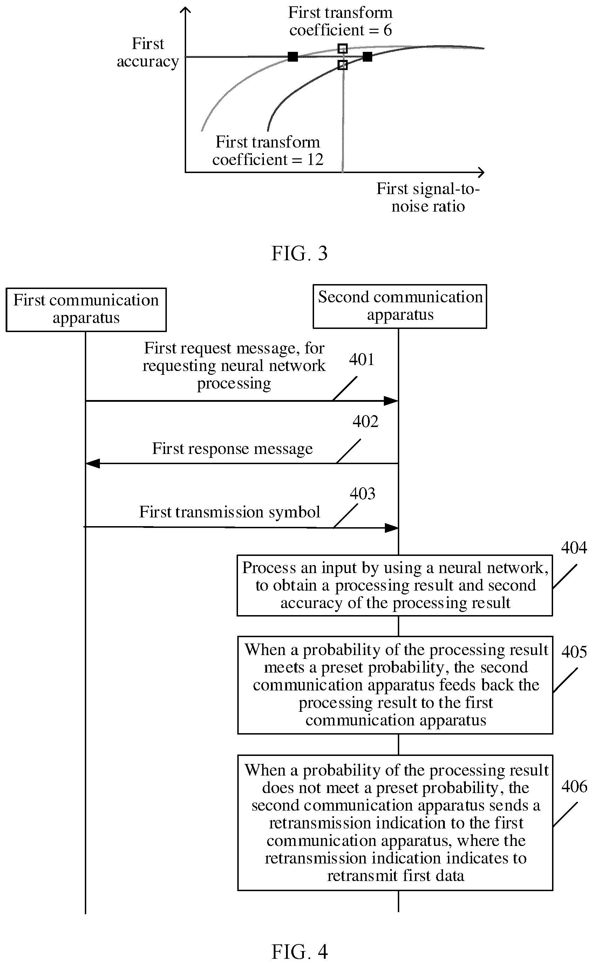

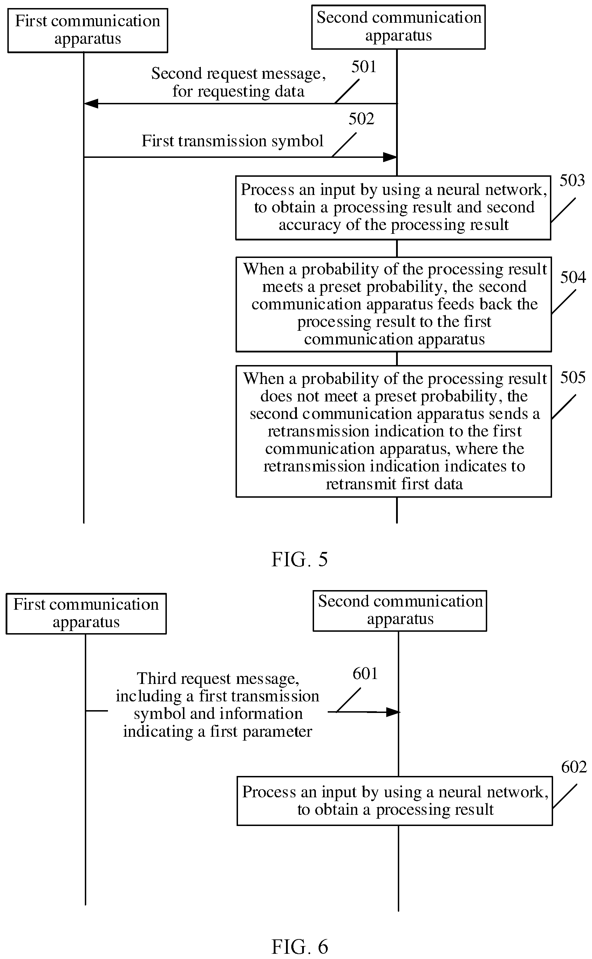

The first parameter may be understood as a parameter used by the first communication apparatus to process data (for example, the first data described in this application). For example, the first parameter may also be referred to as a first transmission parameter, a first processing parameter, or the like. This is not limited in this embodiment of this application. For example, if the first communication apparatus performs linear transformation or non-linear transformation on the first data, the first parameter may include a first transform coefficient (where for example, refer to the following method shown in FIG. 4). For another example, if the first communication apparatus encodes and modulates the first data, the first parameter may include a first modulation order and a first code rate (where for example, refer to the following method shown in FIG. 5). For another example, if the first communication apparatus needs to modulate the first data, the first parameter may include a first modulation order. For another example, if the first communication apparatus needs to encode the first data, the first parameter may include a first code rate. It may be understood that for specific descriptions of step 202, refer to the following. Details are not described one by one herein.

The first channel information is information about a channel between the first communication apparatus and the second communication apparatus. For example, the first channel information may be channel state information (channel state information, CSI) between the first communication apparatus and the second communication apparatus. For another example, the first channel information may be information indicating channel quality between the first communication apparatus and the second communication apparatus.

In this embodiment of this application, that the first parameter is determined based on first accuracy and first channel information may alternatively be understood as that the first parameter is related to the first accuracy and the first channel information, or the first parameter is obtained based on the first accuracy and the first channel information. A parameter (for example, the first parameter) used by the first communication apparatus to process data is determined based on the first accuracy and the first channel information, so that the first communication apparatus may process the data according to a requirement of processing the data by the neural network. In this way, the first data is processed by fully using an accuracy requirement of processing the data by the neural network and the channel quality, thereby improving radio resource utilization. If the accuracy requirement is slightly low, when the first communication apparatus performs processing based on the transform coefficient, a processing requirement on data may be relaxed (where for example, a few effective features are retained). It may be understood that for a relationship between the first parameter, the first accuracy requirement, and the first channel information, refer to the following (for example, related descriptions in Table 1 to Table 9). Details are not described one by one herein.

In a possible implementation, after obtaining the first data, the first communication apparatus may directly process the first data based on the first parameter.

In another possible implementation, before the first communication apparatus processes the first data based on the first parameter, the method shown in FIG. 2 further includes: The first communication apparatus embeds the first data into continuous space.

It may be understood that the foregoing step may alternatively be understood as embedding the first data into the continuous space based on a type of the first data, or embedding, based on a type of that processed by the neural network in the second communication apparatus, data (that is, the first data) to be sent to the second communication apparatus into the continuous space.

For example, when the first data includes the data, the model parameter, the intermediate gradient data, or the like that is processed by the partial layer neural network, because the first data is in the continuous space, an embedding operation may not be performed. For example, for the original data, for example, when the first data includes the image data, the voice data, or wireless data (for example, channel information), if the first data is in the continuous space (where for example, the image data or the voice data is in a numerical form), an embedding operation may not be performed on the first data. When the first data includes the text data or other discrete-type data (where for example, a value of the first data is not in a numerical form, but in a form of a letter, a text, or the like), the first data needs to be embedded into the continuous space. Optionally, the original data may be embedded, based on a task of the neural network processing (for example, a task of natural language processing), into space that reflects an input semantic distance. For example, discrete space of a language is embedded into the continuous space through learning, and a distance of the continuous space may reflect a semantic distance of a word.

Optionally, the first communication apparatus may perform an embedding operation or the like by using the neural network. This is not limited in this embodiment of this application. For example, the embedding operation may be implemented by using a pre-trained network, may be implemented by using a pre-trained mapping relationship, or the like. For example, through pre-trained mapping, the first communication apparatus may map a word (word) to a real number vector (where for example, each word may correspond to one vector, or the like).

203: The first communication apparatus sends the first transmission symbol to the second communication apparatus. Correspondingly, the second communication apparatus receives the first transmission symbol.

It may be understood that before sending the first transmission symbol, the first communication apparatus may further perform other processing. This is not limited in this embodiment of this application. For example, the first communication apparatus may map the first transmission symbol to a transmission resource (for example, a time-frequency resource), and send the first transmission symbol by using the transmission resource. For another example, the first communication apparatus may perform power allocation, for example, send the first transmission symbol based on specific transmit power. Generally, the power allocation is mainly for coping with a fading channel scenario, to implement channel whitening or feature extraction. For example, the channel whitening may be understood as that the first communication apparatus allocates power based on different fading degrees of subcarriers, to ensure that the second communication apparatus sees same fading. The feature extraction may be understood as implementing a weight convolution operation through the power allocation. For example, the feature extraction may be a layer in a convolutional neural network. It may be understood that specific descriptions of the channel whitening and the feature extraction are not limited in this embodiment of this application.

204: The second communication apparatus processes the first transmission symbol based on the first parameter, to obtain an input of the neural network.

In other words, after obtaining the first transmission symbol, the second communication apparatus may perform inverse processing on the first transmission symbol based on the first parameter, to obtain data that meets the input of the neural network. The input in step 204 may be understood as the data that meets the input of the neural network.

For example, the second communication apparatus performs inverse transformation on the first transmission symbol based on the first transform coefficient. For example, the inverse transformation may include linear transformation or non-linear transformation. For another example, the second communication apparatus may perform demodulation processing on the first transmission symbol based on the first modulation order. For another example, the second communication apparatus may perform decoding processing on the first transmission symbol based on the first code rate. For another example, the second communication apparatus may demodulate and decode the first transmission symbol based on the first modulation order and the first code rate.

205: The second communication apparatus processes the input by using the neural network, to obtain a processing result.

Optionally, the second communication apparatus may further obtain accuracy of the processing result.

Optionally, when the first data is embedded into the continuous space, the second communication apparatus may perform an inverse embedding operation by using the neural network, or after obtaining the processing result by using the neural network, the second communication apparatus may perform an inverse embedding operation on the processing result. This is not limited in this embodiment of this application. For example, the second communication apparatus may map a real number vector that is output by the neural network to a word or the like. For another example, if the first communication apparatus embeds a graph structure into real number vector space through graph embedding, correspondingly, the second communication apparatus may restore the graph structure from the real number vector space.

It may be understood that for specific descriptions of the output of the neural network, refer to the foregoing descriptions. Details are not described herein again. For a method after the second communication apparatus obtains the processing result, refer to the following descriptions of FIG. 4 to FIG. 6. Details are not described one by one herein.

Generally, when data is transmitted by using a wireless transmission solution, neural network processing is performed only after the data transmission is completely correct. However, in the method provided in this embodiment of this application, the first communication apparatus may process the first data based on the first parameter, and the first parameter is determined based on the first accuracy and the first channel information. Therefore, when the first communication apparatus transmits data, the second communication apparatus may perform neural network processing on the data as long as processing on the data meets the first accuracy and the first channel information. This improves a case in which the data is retransmitted because correctness of the data transmission needs to be ensured, and effectively improves the radio resource utilization.

To further understand the method provided in this application, the first parameter described in this application is described in detail below.

### Implementation 1:

The first parameter includes the first transform coefficient, and the first transform coefficient indicates a dimension ratio of the first data to the first transmission symbol. For example, the quantity of elements in the first data and the quantity (for example, the quantity of first transmission symbols) of elements in the first transmission symbol may be used to represent the dimension ratio of the first data to the first transmission symbol. For example, a form of the first data may include a vector, a matrix, or the like. This is not limited in this embodiment of this application.

For example, that the first communication apparatus processes the first data includes that the first communication apparatus performs transformation processing on the first data. The transformation includes linear transformation, for example, discrete Fourier transform or discrete cosine transform, or includes transformation of the neural network or the like. This is not limited in this embodiment of this application. Dimension adaptation between the first data and the first transmission symbol may be implemented through transformation processing. The dimension adaptation may be understood as a proper quantity of transmission symbols determined based on a dimension of the first data and a requirement of the first accuracy of processing the data by the neural network.

In this implementation, a relationship between the first transform coefficient, the first accuracy, and the first channel information may be described as follows:

For example, a larger first transform coefficient indicates that fewer effective features are retained when the first communication apparatus processes the first data. Therefore, fewer transmission resources are used when the first transmission symbol is transmitted, causing lower first accuracy of processing the data by the neural network. For another example, when the first channel information is the same (where for example, the channel quality is the same), a smaller first transform coefficient indicates a higher requirement of the first accuracy. For another example, when requirements of the first accuracy are the same, better channel quality indicated by the first channel information indicates a larger first transform coefficient.

Generally, wireless transmission aims to maximize a throughput, and a corresponding parameter, for example, a channel quality indication (channel quality indication, CQI) or a modulation and coding scheme (modulation and coding scheme, MCS), is set according to a reliability requirement. For example, a method for setting the foregoing parameter may include an MCS corresponding to channel quality (for example, a signal-to-noise ratio (signal-to-noise ratio, SNR)) when a block error rate (block error rate, BLER) is equal to 0.1 or 0.001. However, in this embodiment of this application, the neural network has flexible tolerance for an error of the data. For example, as the error increases, the accuracy of the processing result may steadily decrease. In other words, data processing of the neural network may have flexible accuracy. Therefore, in this embodiment of this application, a dynamic first transform coefficient and dynamic first accuracy can be supported in a large range of channel quality interval.

In a possible implementation, the relationship between the first transform coefficient, the first accuracy, and the first channel information may be represented in a form of a curve. For example, FIG. 3 is a schematic diagram of a relationship between first accuracy and a first signal-to-noise ratio according to an embodiment of this application. It may be understood that the first transform coefficient = 6 and the first transform coefficient = 12 shown in FIG. 3 are merely examples, and should not be understood as a limitation on this embodiment of this application. For example, the neural network includes inference. It can be learned from two curves shown in FIG. 3 that as the first signal-to-noise ratio increases, the first accuracy of the inference increases. It can be learned from a line parallel to a horizontal axis shown in FIG. 3 that when first accuracy is the same, a larger first signal-to-noise ratio indicates a larger first transform coefficient. It can be learned from a line parallel to a vertical axis shown in FIG. 3 that when first signal-to-noise ratios are the same, a smaller first transform coefficient indicates higher first accuracy.

Therefore, for example, for a service (for example, a service such as a self-driving service or radar sensing that has a high requirement on accuracy) that has a requirement on accuracy, as shown by the line parallel to the horizontal axis shown in FIG. 3, a corresponding transform coefficient may be selected under a corresponding signal-to-noise ratio condition, to meet the requirement on the accuracy. For example, for a service (for example, a service such as image recognition or foreign object detection that has a low requirement on accuracy) whose accuracy is elastic and controllable, as shown by the line parallel to the vertical axis shown in FIG. 3, a balance between the accuracy and a transmission resource may be achieved by controlling a transform coefficient under a current signal-to-noise ratio condition. It may be understood that a unit of the horizontal axis shown in FIG. 3 may be dB, and a unit of the vertical axis may be a percentage.

In another possible implementation, the relationship between the first transform coefficient, the first accuracy, and the first channel information may be represented in a function form, for example, first transform coefficient = f(first accuracy, first channel information), for example, first transform coefficient = fi(first accuracy, first SNR), or first transform coefficient = f₂(first accuracy, first SINR).

In still another possible implementation, the relationship between the first transform coefficient, the first accuracy, and the first channel information may be represented in a tabular form. For example, Table 1 shows a relationship between the first transform coefficient and the first channel information when the first accuracy is equal to 99%. Table 2 shows a relationship between the first transform coefficient and the first channel information when the first accuracy is equal to 90%. Table 3 shows a relationship between the first transform coefficient and the first channel information when the first accuracy is equal to 80%. It may be understood that in Table 1 to Table 3, an SNR is used as an example to indicate channel quality. However, this should not be understood as a limitation on this embodiment of this application. For example, the channel quality may alternatively be indicated by using a signal to interference plus noise ratio (signal to interference plus noise ratio, SINR).

**Table 1**

| Index | 0 | 1 | 2 | 3 | 4 | 5 | 6 | ... | |
|---|---|---|---|---|---|---|---|---|---|
| First transform coefficient | 1/8 | 1/4 | 1/2 | 1 | 2 | 4 | 8 | ... | |
| First signal-to-noise ratio | -4 | -3 | -2 | -1 | 0 | 1 | 2 | ... | |

**Table 2**

| Index | 0 | 1 | 2 | 3 | 4 | 5 | 6 | ... | |
|---|---|---|---|---|---|---|---|---|---|
| First transform coefficient | 1/6 | 1/3 | 1 | 3/2 | 3 | 6 | 12 | ... | |
| First signal-to-noise ratio | -4 | -3 | -2 | -1 | 0 | 1 | 2 | ... | |

**Table 3**

| Index | 0 | 1 | 2 | 3 | 4 | 5 | 6 | ... | |
|---|---|---|---|---|---|---|---|---|---|
| First transform coefficient | 1/4 | 1/2 | 1 | 2 | 4 | 8 | 16 | ... | |
| First signal-to-noise ratio | -4 | -3 | -2 | -1 | 0 | 1 | 2 | ... | |

Based on different first accuracy shown in Table 1 to Table 3, the first transform coefficient may be determined based on different types or different stages of the neural network processing. For example, the type of the neural network processing may include radar sensing, self-driving analysis, or the like. In this case, the first transform coefficient may be determined based on high first accuracy and the first channel information. For another example, the type of the neural network processing includes image recognition, foreign object detection, machine translation, or the like. In this case, the first transform coefficient may be determined based on low first accuracy (which may be understood as that there is no strict requirement on the accuracy), the transmission resource, and the like. For another example, there may be a large error at an early stage of neural network training. Therefore, a table with the low first accuracy may be selected to improve the radio resource utilization. For another example, more refined parameter updating is needed at a later stage of the neural network training. Therefore, a table with the high first accuracy may be selected.

It may be understood that Table 1 to Table 3 are shown by using an example in which the first accuracy is 99%, 90%, and 80% respectively. However, optionally, a corresponding table may alternatively be selected according to an upward alignment method of an actual accuracy requirement. For example, when the requirement of the first accuracy is 95%, Table 1 may be selected according to an upward alignment principle. For another example, when the requirement of the first accuracy is 89%, Table 2 may be selected according to the upward alignment principle. Optionally, a corresponding table may alternatively be selected according to a downward alignment method of the actual accuracy requirement. Optionally, Table 1 may alternatively correspond to accuracy of 99% or more, Table 2 corresponds to accuracy of 90% to 99%, and Table 3 corresponds to accuracy of 80% to 89%.

It may be understood that specific relationships shown in Table 1 to Table 3 are merely examples. In a specific implementation, the relationship between the first transform coefficient, the requirement of the first accuracy, and the first channel information is not limited thereto. For example, the first accuracy may further include 95%, 80%, 70%, or the like.

In still another possible implementation, the first accuracy may alternatively be flexible. In this case, the first transform coefficient may be determined based on the first channel information. For example, the relationship between the first transform coefficient, the first accuracy, and the first channel information may alternatively be shown in Table 4.

**Table 4**

| Index | 0 | | | 1 | | | 2 | | | ... | | | | | |
|---|---|---|---|---|---|---|---|---|---|---|---|---|---|---|---|
| First transform coefficient | 1/8 | 1/6 | 1/4 | 1/4 | 1/3 | 1/2 | 1/2 | 1 | 2 | ... | | | | | |
| First signal-to-noise ratio | -4 | | | -3 | | | -2 | | | ... | | | | | |

Table 4 shows optional first transform coefficients under the channel quality. Different first transform coefficients may correspond to different first accuracy of processing the data by the neural network. For example, flexible first accuracy may be selected based on a transmission resource usage status or a latency requirement, to determine the first transform coefficient. For example, if the latency requirement is strict (where for example, a small latency is required), to process data in a more timely manner, the first transform coefficient may be large. For another example, if the latency requirement is not strict (where for example, the latency may be large), the first transform coefficient may be small. It may be understood that the latency described herein may represent processing and feedback latencies of the neural network. It may be understood that although the first accuracy is not reflected in Table 4, a table may be formulated based on the relationship between the first accuracy, the first channel information, and the first transform coefficient. For example, when the first signal-to-noise ratio is -4 dB, according to a principle that a larger signal-to-noise ratio may indicate higher accuracy, corresponding accuracy may be 99%, 90%, and 80%. Therefore, correspondingly, the first transform coefficients may be 1/8, 1/6, and 1/4 respectively. For example, when the first signal-to-noise ratio is -4 dB, the corresponding first transform coefficients may be 1/8, 1/6, and 1/4. In this case, the first transform coefficient may be selected based on the transmission resource usage status. If there are a few transmission resources, the first transform coefficient may be large, for example, may be 1/6 or 1/4. Alternatively, the first transform coefficient is determined according to the latency requirement. Details are not described herein again.

In still another possible implementation, the relationship between the first transform coefficient, the first accuracy, and the first channel information may alternatively be represented in a tabular form combined with a formula. For example, the relationship between the first transform coefficient, the first accuracy, and the first channel information may be represented by a basic table and a correction formula. If a table with first accuracy = 99% is used as the basic table (that is, basic accuracy = 99%), the correction formula may meet the following formula: correction transform coefficient = f₃(basic transform coefficient, first accuracy), or correction signal-to-noise ratio = f₄(basic signal-to-noise ratio, first accuracy); correction transform coefficient = fs(basic transform coefficient, relative accuracy), or correction signal-to-noise ratio = fs(basic signal-to-noise ratio, relative accuracy); or correction transform coefficient = basic transform coefficient + f₇(first accuracy, basic accuracy), where f₇(first accuracy, basic accuracy) may include any one of f₇(first accuracy - basic accuracy), f₇(first accuracy/basic accuracy), or f₇(1 - first accuracy/basic accuracy). To be specific, the transform coefficient may be corrected according to a function of a difference between the first accuracy and the basic accuracy, a function of a ratio of the first accuracy to the basic accuracy, or the like. In other words, the correction transform coefficient or the correction signal-to-noise ratio may be a result of correcting the transform coefficient or the signal-to-noise ratio in a basic parameter table based on specific accuracy. For example, if the basic table is formulated based on first accuracy = 99%, and the first accuracy during correction is 80%, 80% relative to 99% is the relative accuracy.

It may be understood that the foregoing representation forms of the first transform coefficient, the first accuracy, and the first channel information are merely examples. For specific descriptions of the implementation 1, refer to the following methods shown in FIG. 4 to FIG. 6. The first accuracy described in this embodiment of this application may be represented by a confidence, classification precision, a probability, or the like, or may be represented by any one or more of the following: an MSE, an RMSE, or an MAE.

### Implementation 2:

Optionally, the first parameter includes the first code rate. Optionally, the first parameter includes the first modulation order. Optionally, the first parameter includes the first modulation order and the first code rate.

For example, a relationship between the first code rate and the first accuracy may be described as follows. For example, a larger first code rate indicates higher first accuracy. For another example, when the first channel information is the same (where for example, the channel quality is the same), the larger first code rate indicates the higher first accuracy. For another example, when the first accuracy is the same, better channel quality indicated by the first channel information indicates a smaller first code rate. For example, a relationship between the first code rate, the first accuracy, and the first channel information may be represented in a function form, for example, first code rate = f₈(first accuracy, first channel information). For another example, the relationship between the first code rate, the first accuracy, and the first channel information may be represented in a tabular form. For the relationship between the first code rate, the first accuracy, and the first channel information, refer to the following relationship among the first code rate, the first modulation order, the first accuracy, and the first channel information.

In a possible implementation, a relationship between the first code rate, the first modulation order, and a requirement of the first accuracy may be represented in a function form, for example, (first modulation order, first code rate) = f₉(first accuracy, first channel information).

In another possible implementation, the relationship between the first code rate, the first modulation order, the first accuracy, and the first channel information may be represented in a tabular form, as shown in Table 5 and Table 6. Table 5 shows a relationship between the first code rate, the first modulation order, and the first channel information (for example, represented by an SNR) when the first accuracy is equal to 99%. Table 6 shows a relationship between the first code rate, the first modulation order, and the first channel information when the first accuracy is equal to 90%.

**Table 5**

| Index | 0 | 1 | 2 | 3 | 4 | 5 | 6 | ... | |
|---|---|---|---|---|---|---|---|---|---|
| First modulation order | 2 | 2 | 2 | 4 | 4 | 6 | 6 | ... | |
| First code rate | 1/3 | 1/2 | 2/3 | 1/2 | 2/3 | 1/2 | 2/3 | | |
| First signal-to-noise ratio | -4 | -3 | -2 | -1 | 0 | 1 | 2 | ... | |

**Table 6**

| Index | 0 | 1 | 2 | 3 | 4 | 5 | 6 | ... | |
|---|---|---|---|---|---|---|---|---|---|
| First modulation order | 2 | 4 | 4 | 6 | 6 | 6 | 8 | ... | |
| First code rate | 1/2 | 1/2 | 2/3 | 1/2 | 2/3 | 5/6 | 2/3 | | |
| First signal-to-noise ratio | -4 | -3 | -2 | -1 | 0 | 1 | 2 | ... | |

For example, when the first accuracy is represented by an MSE, the relationship between the first code rate, the first modulation order, the first accuracy, and the first channel information may alternatively be shown in Table 7 and Table 8. For example, Table 7 shows a relationship between the modulation order, the code rate, and the channel information when MSE = 0.01. Table 8 shows a relationship between the modulation order, the code rate, and the channel information when MSE = 0.1.

**Table 7**

| Index | 0 | 1 | 2 | 3 | 4 | 5 | 6 | ... | |
|---|---|---|---|---|---|---|---|---|---|
| First modulation order | 2 | 2 | 2 | 4 | 4 | 4 | 6 | ... | |
| First code rate | 1/2 | 2/3 | 3/4 | 1/2 | 2/3 | 3/4 | 2/3 | | |
| First signal-to-noise ratio | -4 | -3 | -2 | -1 | 0 | 1 | 2 | ... | |

**Table 8**

| Index | 0 | 1 | 2 | 3 | 4 | 5 | 6 | ... | |
|---|---|---|---|---|---|---|---|---|---|
| First modulation order | 2 | 4 | 4 | 4 | 6 | 6 | 8 | ... | |
| First code rate | 2/3 | 1/2 | 2/3 | 3/4 | 2/3 | 5/6 | 2/3 | | |
| First signal-to-noise ratio | -4 | -3 | -2 | -1 | 0 | 1 | 2 | ... | |

For elastic first accuracy, the relationship between the first modulation order, the first code rate, the first accuracy, and the first channel information may alternatively be shown in Table 9. A table shown in Table 9 shows a first modulation order and a first code rate that correspond to a lowest acceptable first accuracy under the channel quality. Therefore, a first modulation order and a first code rate that are not lower than those shown in Table 9 may be selected based on conditions such as a transmission resource usage status and a latency requirement. Alternatively, for a service with elastic accuracy, only a channel quality level indicator, and a first modulation order and a first code rate that correspond to a lowest acceptable distance (for example, an MSE) of feature space may be defined.

For specific descriptions of the elastic first accuracy, refer to the following method shown in FIG. 6.

**Table 9**

| Index | 0 | 1 | 2 | 3 | 4 | 5 | 6 | ... | |
|---|---|---|---|---|---|---|---|---|---|
| First modulation order | 2 | 2 | 2 | 4 | 4 | 6 | 6 | ... | |
| First code rate | 1/3 | 1/2 | 2/3 | 1/2 | 2/3 | 1/2 | 2/3 | | |
| First signal-to-noise ratio | -4 | -3 | -2 | -1 | 0 | 1 | 2 | ... | |

It may be understood that, for a neural network processing service whose accuracy requirement is 100% or whose feature space distance is 0, a common transmission parameter table (for example, a table corresponding to an MCS) may be reused, to provide a reliable transmission service.

It may be understood that the tables shown in this application are merely examples, and the tables shown in this application should not be understood as a limitation on this application. Optionally, Table 1 to Table 9 may alternatively not include the first signal-to-noise ratio (which may alternatively be understood as that the first signal-to-noise ratio is merely a reference for formulating a table). For example, Table 1 to Table 4 may include the first transform coefficient and the corresponding index. Table 5 to Table 9 may include the first modulation order, the first code rate, and the corresponding index. For specific descriptions of the implementation 2, refer to the following methods shown in FIG. 4 to FIG. 6.

With reference to the foregoing method, embodiments of this application further provide the following several data transmission methods.

FIG. 4 is a schematic flowchart of a data processing method according to an embodiment of this application. As shown in FIG. 4, the method includes the following steps.

401: A first communication apparatus sends a first request message to a second communication apparatus, where the first request message is for requesting neural network processing. Correspondingly, the second communication apparatus receives the first request message.

In other words, the method shown in FIG. 4 may be understood as that the first communication apparatus requests the neural network in the second communication apparatus to process data (which may also be briefly referred to as that a node requests a neural network processing mode). To be specific, the first communication apparatus provides data, and the second communication apparatus provides a neural network processing service.

It may be understood that the first communication apparatus described in this embodiment of this application may also be referred to as a first node or a transmit end (that is, a device that provides data), and the second communication apparatus may also be referred to as a second node or a receive end (that is, a device that performs neural network processing on data). For example, the first communication apparatus may be a terminal device or the like, and the second communication apparatus may be an access network device or the like.

402: The second communication apparatus sends a first response message to the first communication apparatus. Correspondingly, the first communication apparatus receives the first response message.

Content in the first request message and the first response message may be implemented in the following several manners.
1. The first request message includes first indication information, and the first indication information indicates first accuracy. The first accuracy may be a requirement of the first communication apparatus on accuracy of processing data by the neural network, expected accuracy of the first communication apparatus, or the like. For example, the first accuracy may include any one of 99%, 95%, 90%, 85%, 80%, 75%, 70%, 65%, or the like. Alternatively, the first accuracy may be divided in another manner. For example, the first accuracy includes any one of 90%, 80%, 70%, 60%, 50%, or the like. It may be understood that the first indication information may alternatively indicate the first accuracy in an index manner. For example, the index may be the index of the table shown in Table 1 to Table 9 (that is, the first accuracy is indicated by using the index of the table), or may be an index of another type. This is not limited in this embodiment of this application.
2. The first request message includes first indication information, and the first indication information indicates a first parameter. Optionally, the first parameter may include a first transform coefficient, or may include a first code rate, a first modulation order, and the like. Optionally, the first indication information may indicate the first parameter in an index manner. For example, the first indication information indicates a first index. For example, the first index may be the index shown in Table 1 to Table 9, for example, any one of indexes 0 to 6 in Table 1. Alternatively, the first index may be an index of another type, or the like. This is not limited in this embodiment of this application. It may be understood that the indexes of the tables shown above in this application are merely examples, and the indexes shown in Table 1 to Table 3 may alternatively be continuous indexes or the like. This is not limited in this embodiment of this application. For another example, the indexes shown in Table 1 to Table 9 may be continuous indexes or the like. For another example, the indexes shown in Table 5 and Table 6 may be continuous indexes or the like.
   It may be understood that when the first indication information indicates the first parameter or the first index, it indicates that the first communication apparatus has obtained first channel information in advance.
3. The first response message includes acknowledgment indication information, and the acknowledgment indication information is for acknowledging first indication information. For example, the acknowledgment indication information is for acknowledging first accuracy indicated by the first communication apparatus (or acknowledging that the first communication apparatus determines a first parameter by using the first accuracy). For example, if the first communication apparatus is an access network device, and the second communication apparatus is a terminal device, based on the acknowledgment indication information fed back by the terminal device, the access network device may independently determine the first parameter based on the first accuracy. For another example, the acknowledgment indication information may be for acknowledging that the first communication apparatus uses the first parameter, a first index, or the like. It may be understood that the acknowledgment indication information described herein may be one bit. When a value of the bit is 1, it may be for acknowledging that the first communication apparatus can use content indicated by using the first indication information. When a value of the bit is 0, it indicates that the first communication apparatus cannot use content indicated by using the first indication information. In this case, the first response message may further include second indication information and the like.
4. The first response message includes second indication information. When first indication information indicates first accuracy, the second indication information may indicate a first parameter. For example, if the first communication apparatus is a terminal device, and the second communication apparatus is an access network device, the access network device may determine the first parameter based on the first accuracy sent by the terminal device. For example, when the access network device obtains first channel information in advance, the access network device may determine the first parameter based on the first channel information and the first accuracy, to send the first response message to the terminal device. However, if the access network device does not obtain the first channel information before receiving the first request message, the first request message may further include a reference signal (reference signal, RS). Therefore, the access network device may perform channel estimation based on the reference signal, to obtain the first channel information. Then, the first parameter is determined based on the first channel information and the first accuracy.
5. The first response message includes second indication information, and the second indication information indicates a second parameter. For example, after obtaining first indication information, the second communication apparatus may re-determine a transform coefficient, a code rate, or the like according to a requirement of the second communication apparatus on neural network accuracy. For example, if the first communication apparatus is a terminal device, and the second communication apparatus is an access network device, the access network device may re-determine the second parameter based on the first indication information sent by the terminal device. The second parameter includes a second transform coefficient, or includes a second modulation order, a second code rate, and the like.

Optionally, the first indication information, the second indication information, the acknowledgment indication information, or the like may be carried in control information. For example, the control information may include any one or more pieces of downlink control information (downlink control information, DCI), uplink control information (uplink control information, UCI), or sidelink control information (sidelink control information, SCI). Optionally, the first indication information, the second indication information, the acknowledgment indication information, or the like may be carried in radio resource control (radio resource control, RRC) signaling. Optionally, the first indication information, the second indication information, the acknowledgment indication information, or the like may be carried in artificial intelligence (artificial intelligence, AI) dedicated control information, a dedicated control channel, or the like.

Optionally, the first communication apparatus and the second communication apparatus may pre-negotiate a specific type of a parameter. For example, the type of the parameter includes one or more of the following: the transform coefficient, the code rate, or the modulation order. Optionally, the type of the parameter may be determined by the access network device. Generally, a data processing method based on coding and modulation can provide reliable transmission, and can achieve higher inference accuracy when there is a high signal-to-noise ratio. However, performance degradation is faster when there is a low signal-to-noise ratio, and therefore, a data processing method based on direct modulation is more suitable. Therefore, optionally, the first communication apparatus or the second communication apparatus may automatically switch the type of the parameter based on a value of channel information. More suitable data processing methods may be provided under different signal-to-noise ratio conditions through switching of the type of the parameter based on the value of the channel information, thereby obtaining the higher inference accuracy. For example, when channel quality is greater than a quality threshold, the type of the parameter includes one or more of the following: the code rate or the modulation order. When channel quality is less than a quality threshold, the type of the parameter includes the transform coefficient. It may be understood that when the channel quality is equal to the quality threshold, the type of the parameter is not limited, for example, may be preset. This is not limited in this embodiment of this application. For example, the channel quality may include an SNR, an SINR, or the like. For example, when the channel quality includes the SNR, the quality threshold may include any one of 5 dB, 8 dB, 10 dB, or 15 dB.

403: The first communication apparatus sends a first transmission symbol to the second communication apparatus. Correspondingly, the second communication apparatus receives the first transmission symbol.

Step 403 may alternatively be understood as sending the first transmission symbol to the second communication apparatus based on the first response message. For specific descriptions of obtaining the first transmission symbol by the first communication apparatus, refer to the foregoing descriptions in FIG. 2, FIG. 3, or the like. Details are not described herein again. For example, the first communication apparatus may obtain the first transmission symbol based on the first response message, and then send the first transmission symbol.

404: The second communication apparatus processes an input by using the neural network, to obtain a processing result and second accuracy of the processing result.

It may be understood that for a specific method in which the second communication apparatus processes the first transmission symbol to obtain the input of the neural network, refer to the foregoing descriptions. Details are not described herein again. For a specific manner in which the second communication apparatus obtains the processing result, refer to the foregoing descriptions. Details are not described herein again.

For example, the second accuracy of the processing result may be represented by any one or more of the following: a probability, a confidence, classification precision, an MSE, or the like of the processing result. Therefore, for ease of description, the following describes a feedback method of the second communication apparatus by using an example in which the second accuracy is represented by the probability and a preset condition is a preset probability.

405: When the probability of the processing result meets the preset probability, the second communication apparatus feeds back the processing result to the first communication apparatus.

Optionally, the preset probability may be a numerical value. If the probability of the processing result is greater than or equal to the preset probability, it indicates that the probability of the processing result meets the preset probability. Optionally, the preset probability may be a probability range. If the probability of the processing result falls within the probability range, it indicates that the probability of the processing result meets the preset probability. It may be understood that a specific manner of the preset probability is not limited in this embodiment of this application.

406: When the probability of the processing result does not meet the preset probability, the second communication apparatus sends retransmission indication information to the first communication apparatus, where the retransmission indication information indicates to retransmit first data.

Optionally, when the probability of the processing result does not meet the preset probability, the second communication apparatus may alternatively indicate a new parameter, a parameter adjustment direction, or the like to the first communication apparatus. For example, the new parameter may be the second parameter (for example, the second transform coefficient, or the second code rate and the second modulation order) or the like. The parameter adjustment direction may be, for example, increasing the transform coefficient or decreasing the transform coefficient. Optionally, the second communication apparatus may further indicate the new parameter by using an index of the second parameter. It may be understood that after obtaining the new parameter, the first communication apparatus may alternatively retransmit the first data based on the new parameter.

Optionally, after the second communication apparatus obtains retransmitted data and obtains a processing result and a probability of the processing result again, when a difference between the probability obtained again and the probability obtained previously is less than a specific threshold, it may be considered that the retransmitted data does not improve performance of the neural network. Therefore, retransmission may be terminated.

For example, the preset probability may be set by the first communication apparatus, set by the second communication apparatus, negotiated by the first communication apparatus and the second communication apparatus, or the like. A specific method for setting the preset probability is not limited in this embodiment of this application.

It may be understood that the foregoing probability is merely an example. For example, an output of the neural network may alternatively be an entropy, the confidence level, and the like of the processing result. Details are not described herein again.

It may be understood that whether each message described in this embodiment of this application includes an RS is not limited. For example, the first request message may include an RS, so that the second communication apparatus performs channel estimation. For another example, the first response message may include an RS, so that the first communication apparatus performs channel estimation to obtain information about a channel between the first communication apparatus and the second communication apparatus. For another example, when the first communication apparatus sends the first transmission symbol, an RS may be included. For another example, when retransmitting the first data, the first communication apparatus may also send an RS at the same time. This is not limited in this embodiment of this application. When the channel information obtained by using the RS is updated, the first parameter may be updated accordingly.

In this embodiment of this application, when the first communication apparatus transmits data, the second communication apparatus may perform neural network processing on the data as long as processing on the data meets the first accuracy and the first channel information. This improves a case in which the data is retransmitted because correctness of the data transmission needs to be ensured, and effectively improves radio resource utilization.

FIG. 5 is a schematic flowchart of a data processing method according to an embodiment of this application. As shown in FIG. 5, the method includes the following steps.

501: A second communication apparatus sends a second request message to a first communication apparatus, where the second request message is for requesting data. Correspondingly, the first communication apparatus receives the second request message.

In other words, the method shown in FIG. 5 may be understood as that the second communication apparatus requests the data from the first communication apparatus, to perform neural network processing (which may also be briefly referred to as that a node requests a data processing mode). To be specific, the second communication apparatus needs to perform neural network processing on the data of the first communication apparatus.

In this embodiment of this application, the second request message includes third indication information, and the third indication information indicates a first parameter. It may be understood that for a method for determining a type of the first parameter, refer to FIG. 4. Details are not described herein again. It may be understood that for specific descriptions that the third indication information indicates the first parameter, refer to the related descriptions in FIG. 4. Details are not described herein again.

502: The first communication apparatus sends a first transmission symbol to the second communication apparatus. The second communication apparatus receives the first transmission symbol.

Step 502 may alternatively be understood as that the first communication apparatus sends the first transmission symbol to the second communication apparatus based on the second request message. For specific descriptions of obtaining the first transmission symbol by the first communication apparatus, refer to the foregoing descriptions in FIG. 2 to FIG. 4. Details are not described herein again.

503: The second communication apparatus processes an input by using a neural network, to output a processing result and second accuracy of the processing result.

504: When a probability of the processing result meets a preset probability, the second communication apparatus feeds back the processing result to the first communication apparatus.

505: When a probability of the processing result does not meet the preset probability, the second communication apparatus sends a retransmission indication to the first communication apparatus, where the retransmission indication indicates to retransmit first data.

It may be understood that for specific descriptions of step 503 to step 505, refer to the foregoing descriptions. Details are not described herein again.

In this embodiment of this application, when the first communication apparatus transmits data, the second communication apparatus may perform neural network processing on the data as long as processing on the data meets first accuracy and first channel information. This improves a case in which the data is retransmitted because correctness of the data transmission needs to be ensured, and effectively improves radio resource utilization.

FIG. 6 is a schematic flowchart of a data processing method according to an embodiment of this application. As shown in FIG. 6, the method includes the following steps.

601: A first communication apparatus sends a third request message to a second communication apparatus, where the third request message is for requesting neural network processing. Correspondingly, the second communication apparatus receives the third request message.

The third request message includes a first transmission symbol. Optionally, the third request message further includes a reference signal. In other words, for a service with elastic accuracy, when initiating a neural network request, the first communication apparatus may send the first transmission symbol to the second communication apparatus.

Optionally, before the first communication apparatus sends the third request message to the second communication apparatus, the first communication apparatus may further send a fourth request message to the second communication apparatus, where the fourth request message is for requesting neural network processing. For example, the fourth request message may include an RS. After receiving the fourth request message, the second communication apparatus sends a fourth response message to the first communication apparatus, where the fourth response message may include information indicating a first parameter.

Optionally, the third request message may include information indicating the first parameter.

It may be understood that the third request message in FIG. 6 is shown by using an example in which the third request message includes the first transmission symbol and the information indicating the first parameter. However, content included in the third request message should not be understood as a limitation on this embodiment of this application.

It may be understood that for specific descriptions of the elastic accuracy, refer to the foregoing related descriptions in Table 4 or Table 9. Details are not described herein again.

602: The second communication apparatus processes an input by using a neural network, to output a processing result.

It may be understood that for specific descriptions of step 602, refer to the foregoing related descriptions in FIG. 4 or FIG. 5. Details are not described herein again. For example, the second communication apparatus may directly feed back the processing result to the first communication apparatus. Optionally, the neural network may further output second accuracy of the processing result. In this case, the second communication apparatus may directly feed back the processing result and the second accuracy to the first communication apparatus. Optionally, whether the neural network feeds back a retransmission indication based on the second accuracy is not limited in this embodiment of this application.

In this embodiment of this application, when transmitting data, the first communication apparatus may independently determine the first parameter, or the second communication apparatus may independently determine the first parameter, so that the first communication apparatus or the second communication apparatus does not need to negotiate the first parameter with each other, thereby reducing signaling overheads. In addition, the second communication apparatus may perform neural network processing after receiving the first transmission symbol. This improves a case in which the data is retransmitted because correctness of the data transmission needs to be ensured, and effectively improves radio resource utilization.

In embodiments of this application, information for carrying the first parameter may also be referred to as second control information. For example, the first indication information in the first request message shown in FIG. 4 may be referred to as second control information. For another example, the second indication information in the first response message may also be referred to as second control information. For another example, the third indication information in the second request message may also be referred to as second control information. For another example, the information that is in the third request message and that indicates the first parameter may also be referred to as second control information. For another example, the information that is in the fourth request message and that indicates the first parameter may also be referred to as second control information. Therefore, this application further provides a schematic structural diagram of a frame structure.

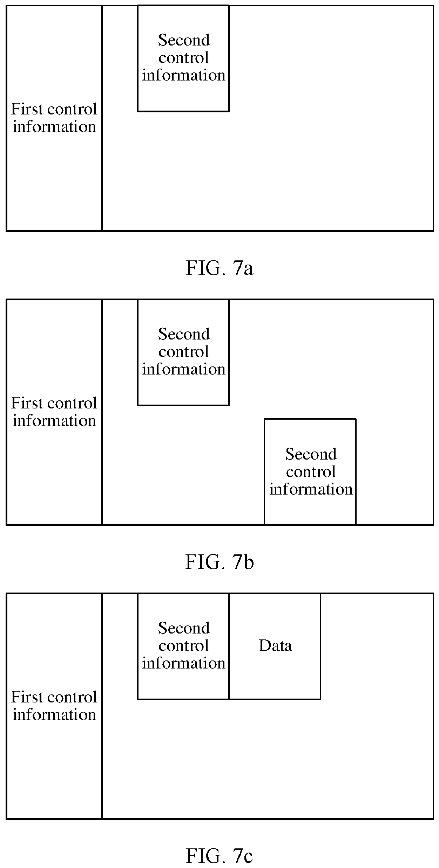

Optionally, as shown in FIG. 7a or FIG. 7b, the frame may include first control information and second control information. For example, one piece of second control information shown in FIG. 7a may be understood as first indication information sent by a first communication apparatus to one second communication apparatus, or second indication information sent by a second communication apparatus to one first communication apparatus. Two pieces of second control information shown in FIG. 7b may be understood as first indication information sent by the first communication apparatus to two second communication apparatuses respectively, or second indication information sent by the second communication apparatus to two first communication apparatuses respectively.

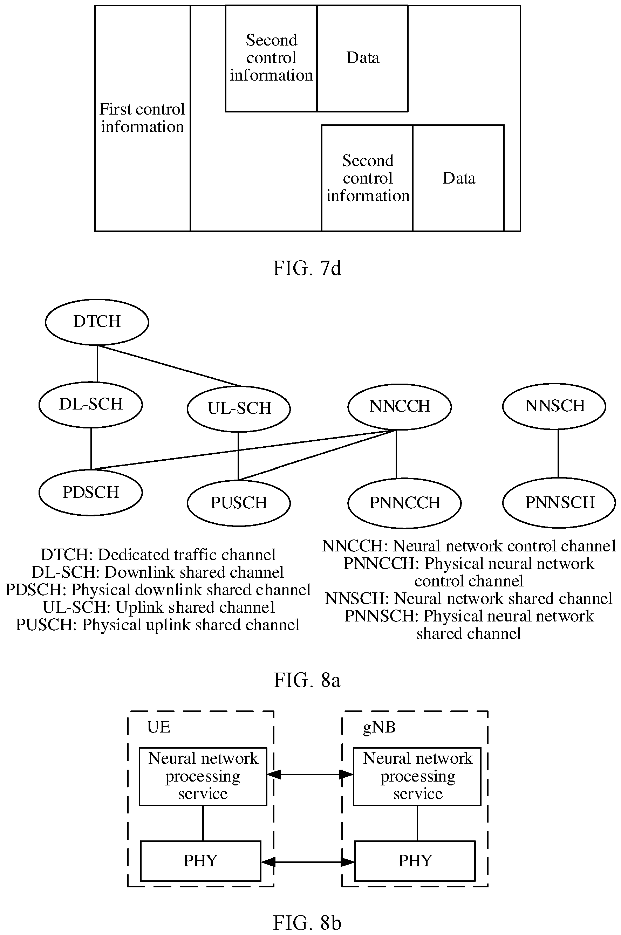

Optionally, FIG. 7c or FIG. 7d is a schematic diagram of a frame structure used when control information and data are simultaneously sent. For example, the frame structure shown in FIG. 7c or FIG. 7d may be used in the foregoing scenario in which the third request message includes both the first transmission symbol and the information indicating the first parameter.

For example, the second control information may indicate the first parameter, first accuracy, or the like.

In a possible implementation, the first control information may indicate a resource location occupied by data to be processed by a neural network. For example, the first control information may indicate a time-frequency resource occupied by the first transmission symbol. In other words, conventional resource scheduling control is separated from neural network processing control described in this application. To be specific, the first control information may indicate that content included in the frame is a related parameter (for example, the first parameter) and related data (for example, the first transmission symbol) that are in the data processing method described in this application.

In another possible implementation, the first control information may indicate that the second control information is control information of conventional data transmission or control information of neural network processing. For example, the control information of the conventional data transmission may be understood as downlink control information, uplink control information, or the like in a wireless transmission design, and the control information of the neural network processing may be understood as information of the neural network processing related to embodiments of this application, for example, the first parameter or the first accuracy.

In other words, because the data processing method oriented to neural network processing in this application includes the transmission symbol, the first parameter, the first accuracy, or the like, when a radio spectrum resource is shared with the conventional data transmission, an indication may be performed by separate first control information. In an implementation, the resource scheduling control is separated from the neural network processing control. For example, the first control information in a frame structure header may indicate the resource location occupied by the data processed by the neural network, and the second control information indicates information such as the related parameter or accuracy. In another implementation, the control information is reused. For example, an identifier is used to indicate that content in the first control information is control information of conventional data processing or the control information of the neural network processing.

In embodiments of this application, because a transmission performance indicator (for example, the first accuracy) of the data processing method described in this application is different from an indicator (for example, a bit error rate or a block error rate) of the conventional data processing, embodiments of this application further provide a transmission channel, a physical channel, or the like corresponding to the neural network processing.

In a possible implementation, as shown in FIG. 8a, a transmission symbol (for example, including the first transmission symbol) obtained according to the foregoing embodiment of this application may be carried on the transmission channel. For example, the first transmission symbol obtained by directly modulating first data may be carried on an uplink or downlink neural network shared channel (neural network shared channel, NNSCH) (which may also be referred to as a neural network processing shared channel). For example, when a terminal device sends a first transmission symbol to an access network device, the first transmission symbol may be carried on the uplink NNSCH. When the access network device sends a first transmission symbol to the terminal device, the first transmission symbol may be carried on the downlink NNSCH. A related parameter obtained according to the foregoing embodiment of this application, for example, the first parameter (or a second parameter), may be carried on a neural network control channel (neural network control channel, NNCCH) (which may also be referred to as a neural network processing control channel) for transmission. The NNCCH may include an uplink NNCCH and a downlink NNCCH. It may be understood that the uplink may be that the terminal device sends information to the access network device, and the downlink may be that the access network device sends information to the terminal device. However, when both the first communication apparatus and the second communication apparatus are terminal devices, the uplink and the downlink may not be distinguished for the NNSCH, and the uplink and the downlink may not be distinguished for the NNCCH, either. In this case, the NNSCH may also be referred to as a sidelink NNSCH, and the NNCCH may also be referred to as a sidelink NNCCH. It may be understood that the NNSCH can not only be used to transmit data related to the neural network processing, but also be used to transmit model data and the like of the neural network. The NNCCH can not only be used to transmit control information related to the neural network processing, but also be used to transmit a related parameter of the NNSCH, other signaling related to the neural network processing, or the like. This is not limited in this embodiment of this application.

Because the NNCCH needs reliable transmission, the NNCCH may be carried on a dedicated physical neural network processing control channel (physical neural network control channel, PNNCCH), or may be carried on a conventional data transmission physical channel, for example, a physical downlink shared channel (physical downlink shared channel, PDSCH) or a physical uplink shared channel (physical uplink shared channel, PUSCH). The NNSCH may be carried on a physical neural network processing shared channel (physical neural network shared channel, PNNSCH), to provide transmission with flexible and controllable accuracy. Generally, a dedicated traffic channel (dedicated traffic channel, DTCH) may be carried on a downlink shared channel (downlink shared channel, DL-SCH) and an uplink shared channel (uplink shared channel, UL-SCH). For example, the DL-SCH and the UL-SCH may be respectively carried by using the PDSCH and the PUSCH.

Optionally, the reference signal in this embodiment of this application may include a neural network processing reference signal, and the neural network processing reference signal may be for channel estimation and accuracy estimation in a neural network processing process.

It may be understood that FIG. 8b is a schematic diagram of a layer corresponding to neural network processing according to an embodiment of this application. As shown in FIG. 8b, each of the terminal device and the access network device (for example, a gNB in FIG. 8b) may include a layer corresponding to a neural network processing service, and the layer corresponding to the neural network processing service is located above a physical (physical, PHY) layer. The layer corresponding to the neural network processing service may be used to process the first data, or process the first transmission symbol, to input the first transmission symbol to the neural network. A specific name of the layer corresponding to the neural network processing service is not limited in this embodiment of this application. For example, the first data obtained by the first communication apparatus from the layer corresponding to the neural network processing service may be directly transmitted through the physical layer. After obtaining the first transmission symbol, the second communication apparatus may directly transmit the first transmission symbol to the layer corresponding to the neural network processing service after processing the first transmission symbol at the physical layer.

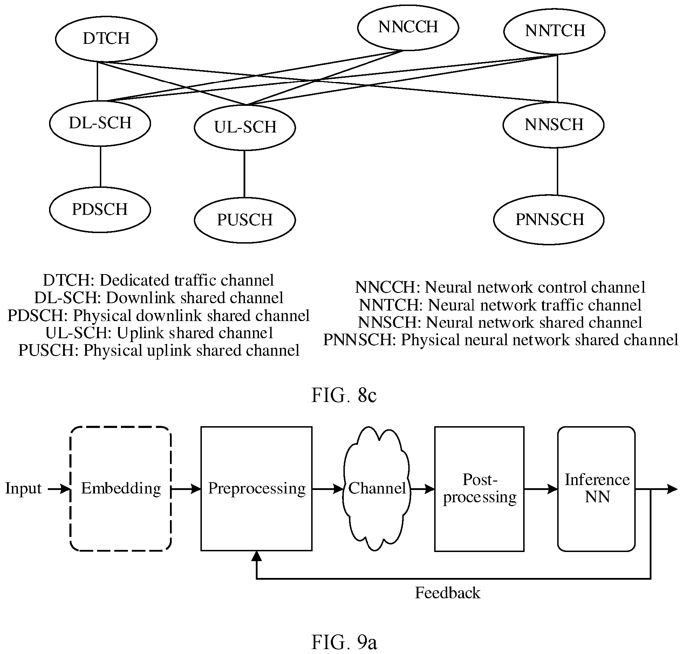

In another possible implementation, as shown in FIG. 8c, in the foregoing embodiments of this application, a dedicated neural network processing logical channel, neural network processing transmission channel, and neural network processing control channel may be defined. For example, the neural network processing logical channel may include an NNCCH, an NNTCH, or the like. The neural network processing transmission channel may include an NNSCH (including uplink and downlink), and the neural network processing logical channel may be carried on a DL-SCH, a UL-SCH, or the NNSCH. A neural network processing physical channel may include a PNNSCH, and the neural network transmission channel may be carried on the PNNSCH or the like. The NNCCH shown in FIG. 8c may be a neural network control channel, and carried on the DL-SCH and the UL-SCH.

For example, the neural network processing logical channel is used to carry neural network processing data. For example, the logical channel may be used to carry data (for example, the first transmission symbol) processed by the neural network. For another example, the logical channel may be used to carry a processing result returned to the neural network. Optionally, the neural network processing transmission channel may be used to carry the neural network processing logical channel, and the neural network processing physical channel may be used to carry the neural network processing transmission channel. The channel provided in this application may provide a corresponding error control level and error level detection according to an accuracy requirement, and may still provide a data transmission service for an upper layer even if there is a transmission error. Optionally, the neural network processing logical channel may be carried on a data shared channel (for example, a PDSCH or a PUSCH) that provides an error-free service, or may be carried on a neural network processing shared channel (for example, the NNSCH). Optionally, data transmission may alternatively be carried on the neural network processing transmission channel. The neural network processing control channel may be used to transmit a configuration, a parameter, and the like related to neural network processing. For example, the neural network processing control channel may be carried on a conventional data shared channel (for example, the DL-SCH or the UL-SCH).

To further understand the data processing method provided in embodiments of this application, the following provides descriptions with reference to specific embodiments.

FIG. 9a is a schematic diagram of a scenario of a data processing method according to an embodiment of this application. As shown in FIG. 9a, a data processing process performed by s first communication apparatus may include embedding, preprocessing, and the like. A data processing process performed by a second communication apparatus includes post-processing, inference, and the like. Alternatively, FIG. 9a may be understood as that the first communication apparatus includes an embedding module, a preprocessing module, and the like, and the second communication apparatus includes a post-processing module, an inference module, and the like. It may be understood that each module shown herein may be a functional module. The functional module may be implemented in a form of hardware, or may be implemented in a form of a software functional module or the like. This is not limited in this embodiment of this application. Because the first communication apparatus may not perform an embedding operation, embedding shown in FIG. 9a is represented by a dashed line.

FIG. 9a may be understood as a data processing method based on direct modulation. As shown in FIG. 9a, the first communication apparatus first embeds an input (for example, first data) into continuous (for example, a continuous real number or complex number) space, performs preprocessing based on first accuracy of neural network processing data (that is, may be understood as determining a first parameter based on the first accuracy, to perform preprocessing), and transforms the input into a first transmission symbol, to implement dimension adaptation. The second communication apparatus performs post-processing on data (for example, the first transmission symbol) transmitted through a channel, to obtain an input of a neural network. Then the neural network (inference shown in FIG. 9a) processes the input to obtain a processing result and second accuracy corresponding to the processing result. The second communication apparatus may further adjust a related parameter (for example, adjust the first parameter) or indicate retransmission based on the second accuracy corresponding to the processing result. Alternatively, the second communication apparatus feeds back the processing result or the like. That the second communication apparatus performs post-processing on data transmitted through a channel includes: The second communication apparatus performs, based on the first parameter, inverse transformation, for example, linear transformation or non-linear transformation, on the first transmission symbol transmitted through the channel. For example, if the first communication apparatus transforms the first data into the first transmission symbol based on a first transform coefficient, the second communication apparatus may inversely transform, into data based on the first transform coefficient, the first transmission symbol that is transmitted through the channel and that is received by the second communication apparatus.

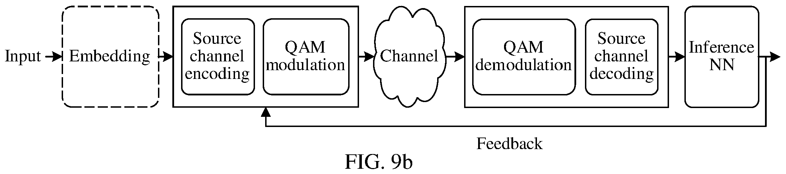

FIG. 9b is a schematic diagram of a scenario of another data processing method according to an embodiment of this application. As shown in FIG. 9b, a data processing process performed by a first communication apparatus may include embedding, source channel encoding, quadrature amplitude modulation (quadrature amplitude modulation, QAM), and the like. A data processing process performed by a second communication apparatus may include QAM demodulation, source channel decoding, inference, and the like. Alternatively, FIG. 9b may be understood as that the first communication apparatus includes an embedding module, a source channel encoding module, a QAM modulation module, and the like. The second communication apparatus includes a QAM demodulation module, a source channel decoding module, an inference module, and the like. It may be understood that the QAM modulation described herein is merely an example, and this embodiment of this application is further applicable to another modulation manner, for example, binary phase shift keying (binary phase shift keying, BPSK) or quadrature phase shift keying (quadrature phase shift keying, QPSK).

It may be understood that FIG. 9b is shown by using an example in which there is the source channel encoding. For example, the source channel encoding may implement transformation (for example, transformation from a real number to a real number) and quantization of embedded data, and map the embedded data to a modulation symbol. However, if there is no source channel encoding, the method provided in this embodiment of this application may include mapping the embedded data to the modulation symbol through encoding.

FIG. 9b may be understood as being based on some or all modules of conventional data transmission. However, a related parameter, retransmission, or the like is determined (for example, determined based on first accuracy or second accuracy) according to the data processing method provided in this embodiment of this application. As shown in FIG. 9b, the first communication apparatus first embeds an input into continuous space, and performs encoding and modulation based on the first accuracy of processing data by a neural network, to obtain a first transmission symbol. The second communication apparatus demodulates and decodes data (for example, the first transmission symbol) transmitted through a channel, to obtain an input of the neural network. Then the neural network processes the input to obtain a processing result and second accuracy corresponding to the processing result. The second communication apparatus may further adjust a related parameter (for example, adjust a first parameter) or indicate retransmission based on the second accuracy corresponding to the processing result. Alternatively, the second communication apparatus feeds back the processing result or the like.

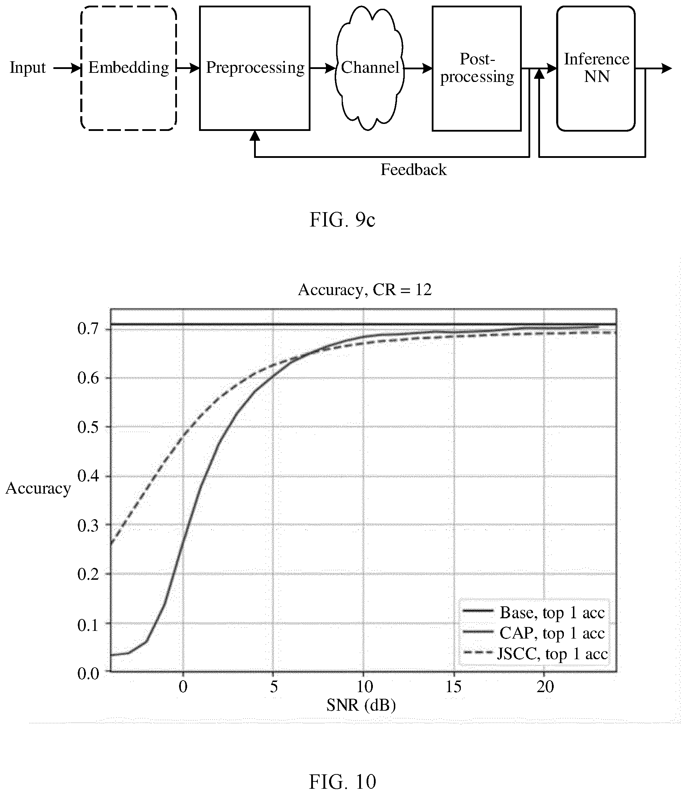

FIG. 9c is a schematic diagram of a scenario of still another data processing method according to an embodiment of this application. FIG. 9c may be understood as a data processing method based on direct modulation, or a data processing method that reuses a conventional part (where for example, preprocessing and post-processing may be conventional modulation and demodulation). However, a related parameter, retransmission, or the like is determined (for example, determined based on a distance of feature space) according to the data processing method provided in this embodiment of this application. It may be understood that for specific descriptions of FIG. 9c, refer to FIG. 9a. Details are not described herein again. For example, the post-processing shown in FIG. 9c may include channel estimation and error estimation. The error estimation may indicate first accuracy of input data of a neural network, that is, the error estimation may be for estimating the first accuracy. Alternatively, the error estimation may indicate second accuracy of a processing result, so that a second communication apparatus may determine whether the retransmission, parameter adjustment, and the like are needed. For example, when a first communication apparatus uses direct modulation (for example, the direct modulation is transformation in continuous space), an input (for example, the input of the first communication apparatus shown in FIG. 9a) may be embedded into the continuous space (for example, the embedding operation shown in FIG. 9a), and then an embedded output is input into the preprocessing, to obtain a first transmission symbol. Therefore, the second communication apparatus may estimate, based on the received first transmission symbol transmitted through a channel, impact of the channel or transmission on a semantic distance, and then adjust a transmission configuration (for example, adjusting a first parameter, and optionally, feeding back the adjustment of the first parameter to the first communication apparatus) based on the second accuracy of inference.

For example, in this embodiment of this application, the following definition is performed: The embedded input (that is, the preprocessed input) is feature space, that is, space in which a feature on which neural network inference needs to be performed is located. The first transmission symbol is located in channel space, that is, space in which the channel is located. An output of the neural network inference is inference space, that is, space in which the processing result is located. A distance (or a loss) of the channel space may be a distance between transmission symbols before and after passing through the channel. A distance (or a loss) of the feature space is a distance between a feature before preprocessing and a feature after post-processing. A distance (or a loss) of the inference space is a distance between outputs of inference of the input of the neural network through and not through transmission. Therefore, a relationship between the distance of the channel space, the distance of the feature space, and the inference distance is shown as follows: For example, the distance of the feature space may be deduced after transmission preprocessing and post-processing are performed on the distance of the channel space, and the distance of the inference space may be obtained after neural network processing is performed on the distance of the feature space.

In this embodiment of this application, the transmission may be decoupled from the inference. Corresponding inference distances (or losses) may be defined based on different tasks, distances of feature space are calculated based on the inference distances, that is, a requirement on the transmission, and then corresponding channel distances may be calculated. A transmission parameter table uses the distance of the feature space as a performance indicator to define a transmission parameter under corresponding channel quality. In other words, the data transmission may correspond to a plurality of types of neural network processing, and a same transmission configuration (for example, the first parameter or the first accuracy) may be reused as long as the neural network processing has a same distance requirement on the feature space. Therefore, in this embodiment of this application, the distance of the feature space may be used as an indicator of retransmission or parameter adjustment, and the distance of the feature space may determine a distance of the neural network inference. In addition, a distance requirement of the neural network inference may determine the distance of the feature space. For example, when an MSE is used as an example of the distance of the feature space, a relationship between the MSE, a code rate, a modulation order, and channel information may be shown in Table 7 to Table 9.

It may be understood that for specific descriptions of the preprocessing described in this embodiment of this application, refer to the related descriptions of step 202 shown in FIG. 2. For specific descriptions of the post-processing, refer to the related descriptions of step 204 shown in FIG. 2. For specific descriptions of a method for determining the related parameter (for example, the first transform coefficient or the first code rate), a retransmission method, or the channel, refer to the foregoing descriptions. Details are not described herein again.

FIG. 10 is a schematic diagram of a simulation result according to an embodiment of this application. FIG. 10 shows a classification task as an example. A horizontal coordinate is a signal-to-noise ratio (dB), and a vertical coordinate is neural network inference, that is, accuracy (accuracy, that is, a proportion of correct classification) of classification. A dashed line part represents performance of a data processing method based on direct modulation. A solid line part represents an upper limit of performance of compression plus coding and modulation of joint photographic experts group (joint photographic experts group, JPEG) (that is, a compression manner oriented to a continuous-tone still image). A transform coefficient (compression ratio, CR) is 12. A solid line part parallel to a horizontal axis represents performance of data when neural network processing is directly performed. It can be learned from FIG. 10 that inference accuracy changes smoothly with the signal-to-noise ratio. Therefore, required accuracy may be achieved by adjusting a parameter (for example, a first parameter or a second parameter), or accuracy may be reduced to save a transmission resource. In addition, when there is a low signal-to-noise ratio, the data processing method (for example, a data processing method based on a first transform coefficient) based on the direct modulation can achieve higher accuracy. When there is a high signal-to-noise ratio, a data processing method based on coding and modulation has higher accuracy. Therefore, different data processing methods may be used under different signal-to-noise ratio conditions, to achieve better performance.

According to the data processing method provided in this application, a related parameter for processing data is set based on first accuracy of processing the data by a neural network, so that data processing only needs to meet the first accuracy of processing the data by the neural network. This improves a case in which the data is continuously retransmitted because correctness of the data transmission needs to be ensured, and effectively improves radio resource utilization. In addition, an end-to-end latency is reduced because the data does not need to be retransmitted until there is no error. Optionally, according to the method provided in this application, bit-level processing does not need to be performed, and impact of a transmission error on neural network processing accuracy is easily evaluated.

The following describes communication apparatuses provided in embodiments of this application.

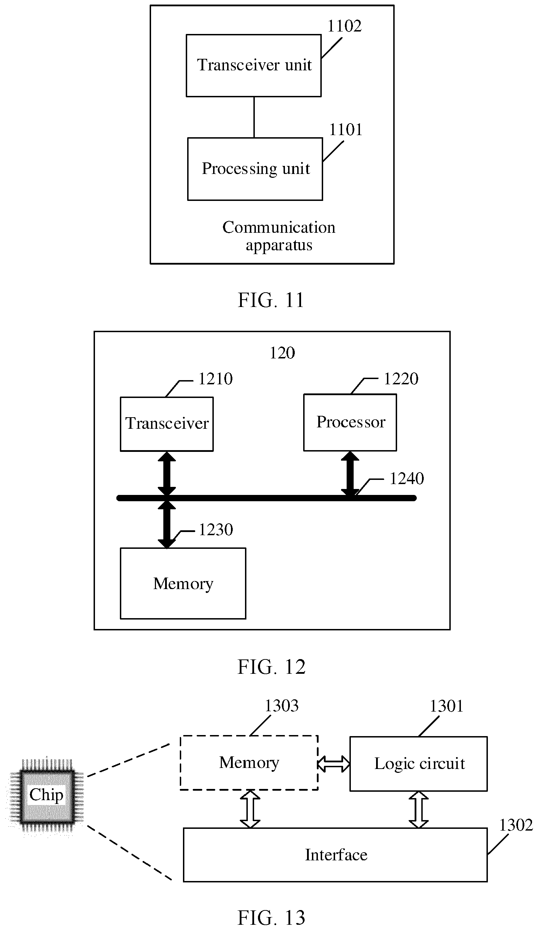

In this application, division into functional modules is performed on the communication apparatus based on the foregoing method embodiments. For example, division into each functional module may be performed based on each corresponding function, or two or more functions may be integrated into one processing module. The integrated module may be implemented in a form of hardware, or may be implemented in a form of a software functional module. It should be noted that, in this application, division into the modules is an example and is merely logical function division. In actual implementation, there may be another division manner. The following describes in detail the communication apparatuses in embodiments of this application with reference to FIG. 11 to FIG. 13.

FIG. 11 is a schematic diagram of a structure of a communication apparatus according to an embodiment of this application. As shown in FIG. 11, the communication apparatus includes a processing unit 1101 and a transceiver unit 1102.

In some embodiments of this application, the communication apparatus may be the foregoing first communication apparatus or a chip, and the chip may be used in (or disposed in) the first communication apparatus. To be specific, the communication apparatus may be configured to perform steps, functions, or the like performed by the first communication apparatus in the foregoing method embodiments.

The processing unit 1101 is configured to: obtain first data, and process the first data based on a first parameter to obtain a first transmission symbol.

The transceiver unit 1102 is configured to send the first transmission symbol to a second communication apparatus.

In a possible implementation, the processing unit 1101 is specifically configured to: transform the first data based on a first transform coefficient, to obtain the first transmission symbol, or encode and modulate the first data based on a first modulation order and a first code rate, to obtain the first transmission symbol.

In a possible implementation, the transceiver unit 1102 is further configured to send a first request message to the second communication apparatus, where the first request message is for requesting neural network processing, the first request message includes first indication information, and the first indication information indicates first accuracy.

The transceiver unit 1102 is further configured to receive a first response message from the second communication apparatus, where the first response message includes second indication information, and the second indication information indicates the first parameter.

In a possible implementation, the transceiver unit 1102 is further configured to receive a second request message from the second communication apparatus, where the second request message is for requesting data, the second request message includes third indication information, and the third indication information indicates the first parameter.

In a possible implementation, the transceiver unit 1102 is further configured to: when second accuracy of a processing result of the first data meets a preset condition, receive a feedback message from the second communication apparatus, where the feedback message includes information indicating the processing result.

In a possible implementation, the transceiver unit 1102 is further configured to: when second accuracy of the processing result of the first data does not meet the preset condition, receive retransmission indication information from the second communication apparatus, where the retransmission indication information indicates to retransmit the first data.

The transceiver unit 1102 is further configured to retransmit the first data based on the retransmission indication information.

In this embodiment of this application, for descriptions of the first parameter, the first accuracy, first channel information, the second accuracy, the first indication information, the second indication information, and the like, refer to the descriptions in the foregoing method embodiments. Details are not described one by one herein again.

It may be understood that specific descriptions of the transceiver unit and the processing unit in this embodiment of this application are merely examples. For specific functions or steps performed by the transceiver unit and the processing unit, refer to the foregoing method embodiments. Details are not described herein again. For example, the processing unit 1101 may be further configured to perform step 201 and step 202 shown in FIG. 2, and the transceiver unit 1102 may be further configured to perform a sending step in step 203 shown in FIG. 2. For another example, the transceiver unit 1102 may be further configured to perform a sending step in step 401, a receiving step in step 402, and a sending step in step 403 shown in FIG. 4. For another example, the transceiver unit 1102 may be further configured to perform a receiving step in step 501 and a sending step in step 502 shown in FIG. 5. For another example, the transceiver unit 1102 may be further configured to perform a sending step in step 601 shown in FIG. 6. It may be understood that the transceiver unit and the receiving unit may be further configured to perform the methods shown in FIG. 9a to FIG. 9c. Details are not described herein again.

FIG. 11 is reused. In some other embodiments of this application, the communication apparatus may be the foregoing second communication apparatus or a chip, and the chip may be used in (or disposed in) the second communication apparatus. To be specific, the communication apparatus may be configured to perform steps, functions, or the like performed by the second communication apparatus in the foregoing method embodiments.

The transceiver unit 1102 is configured to receive a first transmission symbol from a first communication apparatus.

The processing unit 1101 is configured to process the first transmission symbol based on a first parameter, to obtain an input of a neural network.

The processing unit 1101 is further configured to process the input by using the neural network, to obtain a processing result.

In a possible implementation, the processing unit 1101 is specifically configured to: perform inverse transformation on the first transmission symbol based on a first transform coefficient, to obtain the input of the neural network, or demodulate and decode the first transmission symbol based on a first modulation order and a first code rate, to obtain the input of the neural network.

In a possible implementation, the transceiver unit 1102 is further configured to receive a first request message from the first communication apparatus, where the first request message is for requesting neural network processing, the first request message includes first indication information, and the first indication information indicates first accuracy.

The transceiver unit 1102 is further configured to send a first response message to the first communication apparatus, where the first response message includes second indication information, and the second indication information indicates the first parameter.

In a possible implementation, the transceiver unit 1102 is further configured to send a second request message to the first communication apparatus, where the second request message is for requesting data, the second request message includes third indication information, and the third indication information indicates the first parameter.

In a possible implementation, the transceiver unit 1102 is further configured to: when second accuracy of the processing result of the input meets a preset condition, send a feedback message to the first communication apparatus, where the feedback message includes information indicating the processing result.

In a possible implementation, the transceiver unit 1102 is further configured to: when second accuracy of the processing result of the input does not meet the preset condition, send retransmission indication information to the first communication apparatus, where the retransmission indication information indicates to retransmit first data, and the first transmission symbol is obtained based on the first data.

In this embodiment of this application, for descriptions of the first parameter, the first accuracy, first channel information, the second accuracy, the first indication information, the second indication information, and the like, refer to the descriptions in the foregoing method embodiments. Details are not described one by one herein again.

It may be understood that specific descriptions of the transceiver unit and the processing unit in this embodiment of this application are merely examples. For specific functions or steps performed by the transceiver unit and the processing unit, refer to the foregoing method embodiments. Details are not described herein again. For example, the processing unit 1101 may be further configured to perform step 204 and step 205 shown in FIG. 2, and the transceiver unit 1102 may be further configured to perform a receiving step in step 203 shown in FIG. 2. For another example, the processing unit 1101 may be further configured to perform step 404 to step 406 shown in FIG. 4 (where for example, the processing unit 1101 may be configured to control the transceiver unit 1102 to output the processing result, a retransmission indication, or the like). For another example, the transceiver unit 1102 may be further configured to perform a sending step in step 501 and a receiving step in step 502 shown in FIG. 5, and the processing unit 1101 may be further configured to perform step 503 to step 505 shown in FIG. 5. For another example, the transceiver unit 1102 may be further configured to perform a receiving step in step 601 shown in FIG. 6, and the processing unit 1101 may be further configured to perform step 602 shown in FIG. 6. It may be understood that the transceiver unit and the receiving unit may be further configured to perform the methods shown in FIG. 9a to FIG. 9c. Details are not described herein again.

The first communication apparatus and the second communication apparatus in embodiments of this application are described above, and possible product forms of the first communication apparatus and the second communication apparatus are described below. It should be understood that a product in any form that has a function of the first communication apparatus in FIG. 11 or a product in any form that has a function of the second communication apparatus in FIG. 11 falls within the protection scope of embodiments of this application. It should be further understood that the following descriptions are merely examples, and the product forms of the first communication apparatus and the second communication apparatus in this embodiment of this application are not limited thereto.

In a possible implementation, in the communication apparatus shown in FIG. 11, the processing unit 1101 may be one or more processors, and the transceiver unit 1102 may be a transceiver, or the transceiver unit 1102 may be a sending unit and a receiving unit. The sending unit may be a transmitter, the receiving unit may be a receiver, and the sending unit and the receiving unit are integrated into one device, for example, a transceiver. In this embodiment of this application, the processor and the transceiver may be coupled or the like, and a connection manner between the processor and the transceiver is not limited in this embodiment of this application.

As shown in FIG. 12, a communication apparatus 120 includes one or more processors 1220 and a transceiver 1210.

For example, when the communication apparatus is configured to perform the step, method, or function performed by the foregoing first communication apparatus, the processor 1220 is configured to: after obtaining first data, process the first data based on a first parameter, to obtain a first transmission symbol. The transceiver 1210 is configured to send the first transmission symbol to a second communication apparatus.

For example, when the communication apparatus is configured to perform the step, method, or function performed by the foregoing second communication apparatus, the transceiver 1210 is configured to receive a first transmission symbol from a first communication apparatus. The processor 1220 is configured to: process the first transmission symbol based on a first parameter, to obtain an input of a neural network, and process the input by using the neural network, to obtain a processing result.

In this embodiment of this application, for descriptions of the first parameter, first accuracy, first channel information, second accuracy, first indication information, second indication information, and the like, refer to the descriptions in the foregoing method embodiments. Details are not described one by one herein again.

It may be understood that for specific descriptions of the processor and the transceiver, refer to the descriptions of the processing unit and the transceiver unit shown in FIG. 11. Details are not described herein again.

In various implementations of the communication apparatus shown in FIG. 12, the transceiver may include a receiver and a transmitter. The receiver is configured to perform a receiving function (or an operation), and the transmitter is configured to perform a transmitting function (or an operation). In addition, the transceiver is configured to communicate with another device/apparatus through a transmission medium.

Optionally, the communication apparatus 120 may further include one or more memories 1230, configured to store program instructions and/or data. The memory 1230 is coupled to the processor 1220. The coupling in this embodiment of this application is an indirect coupling or a communication connection between apparatuses, units, or modules, may be in an electrical, mechanical, or another form, and is for information exchange between the apparatuses, the units, or the modules. The processor 1220 may operate in collaboration with the memory 1230. The processor 1220 may execute the program instructions stored in the memory 1230. Optionally, at least one of the foregoing one or more memories may be included in the processor. For example, the memory 1230 may store a relationship between the first parameter, the first accuracy, and the first channel information.

A specific connection medium between the transceiver 1210, the processor 1220, and the memory 1230 is not limited in this embodiment of this application. In this embodiment of this application, in FIG. 12, the memory 1230, the processor 1220, and the transceiver 1210 are connected through a bus 1240. The bus is represented by a bold line in FIG. 12. A connection manner between other components is merely an example for description, and is not limited thereto. The bus may be classified into an address bus, a data bus, a control bus, and the like. For ease of representation, only one bold line is for representation in FIG. 12, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like, and may implement or perform the methods, steps, and logic block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

In this embodiment of this application, the memory may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), a compact disc read-only memory (compact disc read-only memory, CD-ROM), or the like. The memory is any storage medium that can be configured to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or data.

The processor 1220 is mainly configured to process a communication protocol and communication data, control the entire communication apparatus, execute a software program, and process data of the software program. The memory 1230 is mainly configured to store the software program and the data. The transceiver 1210 may include a control circuit and an antenna, and the control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, for example, a touchscreen, a display, or a keyboard, is mainly configured to: receive data entered by a user and output data to the user.

After the communication apparatus is powered on, the processor 1220 may read the software program in the memory 1230, interpret and execute instructions of the software program, and process the data of the software program. When data needs to be sent wirelessly, the processor 1220 performs baseband processing on the to-be-sent data (for example, processing the first data based on the first parameter in the foregoing descriptions of this application), and then outputs a baseband signal to a radio frequency circuit. After performing radio frequency processing on the baseband signal, the radio frequency circuit sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1220. The processor 1220 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed and independent of the communication apparatus.

It may be understood that the communication apparatus shown in this embodiment of this application may alternatively have more components than those in FIG. 12. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 11, the processing unit 1101 may be one or more logic circuits, and the transceiver unit 1102 may be an input/output interface, or referred to as a communication interface, an interface circuit, an interface, or the like. Alternatively, the transceiver unit 1102 may be a sending unit and a receiving unit. The sending unit may be an output interface, the receiving unit may be an input interface, and the sending unit and the receiving unit are integrated into one unit, for example, an input/output interface. As shown in FIG. 13, a communication apparatus shown in FIG. 13 includes a logic circuit 1301 and an interface 1302. To be specific, the processing unit 1101 may be implemented by using the logic circuit 1301, and the transceiver unit 1102 may be implemented by using the interface 1302. The logic circuit 1301 may be a chip, a processing circuit, an integrated circuit, a system-on-chip (system on chip, SoC) chip, or the like. The interface 1302 may be a communication interface, an input/output interface, a pin, or the like. For example, FIG. 13 is shown by using an example in which the communication apparatus is a chip. The chip includes the logic circuit 1301 and the interface 1302.

In this embodiment of this application, the logic circuit and the interface may be further coupled to each other. A specific connection manner between the logic circuit and the interface is not limited in this embodiment of this application. Optionally, the communication apparatus shown in FIG. 13 may further include a memory 1303, and the memory may be configured to store a relationship between a first parameter, first accuracy, and first channel information. For example, the memory may be configured to store Table 1 to Table 9, or may be configured to store formulas shown above. Because the memory shown in FIG. 13 may not be integrated with a processor, but located outside the chip, the memory shown in FIG. 13 is represented by a dashed line.

For example, when the communication apparatus is configured to perform the step, method, or function performed by the foregoing first communication apparatus, the logic circuit 1301 is configured to: after obtaining first data, process the first data based on the first parameter, to obtain a first transmission symbol. The interface 1302 is configured to output the first transmission symbol. For example, when the communication apparatus is configured to perform the step, method, or function performed by the foregoing second communication apparatus, the interface 1302 is configured to input a first transmission symbol, and the logic circuit 1301 is configured to: process the first transmission symbol based on the first parameter, to obtain an input of a neural network, and process the input by using the neural network, to obtain a processing result.

It may be understood that the communication apparatus shown in this embodiment of this application may implement the method provided in embodiments of this application in a form of hardware, or may implement the method provided in embodiments of this application in a form of software. This is not limited in this embodiment of this application.

In this embodiment of this application, for descriptions of the first parameter, the first accuracy, the first channel information, second accuracy, first indication information, second indication information, and the like, refer to the descriptions in the foregoing method embodiments. Details are not described one by one herein again.

For specific implementations of the embodiments shown in FIG. 13, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments.

In addition, this application further provides a computer program. The computer program is configured to implement an operation and/or processing performed by a first communication apparatus in the method provided in this application.

This application further provides a computer program. The computer program is configured to implement an operation and/or processing performed by a second communication apparatus in the method provided in this application.

This application further provides a computer-readable storage medium. The computer-readable storage medium stores a computer program or computer-executable instructions. When the computer program or the computer-executable instructions are run on a computer, the computer is enabled to perform an operation and/or processing performed by a first communication apparatus in the method provided in this application.

This application further provides a computer-readable storage medium. The computer-readable storage medium stores a computer program or computer-executable instructions. When the computer program or the computer-executable instructions are run on a computer, the computer is enabled to perform an operation and/or processing performed by a second communication apparatus in the method provided in this application.

This application further provides a computer program product. The computer program product includes computer-executable instructions or a computer program. When the computer-executable instructions or the computer program is run on a computer, an operation and/or processing performed by a first communication apparatus in the method provided in this application is performed.

This application further provides a computer program product. The computer program product includes computer-executable instructions or a computer program. When the computer-executable instructions or the computer program is run on a computer, an operation and/or processing performed by a second communication apparatus in the method provided in this application is performed.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected according to actual requirements to achieve technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all or some of the technical solutions may be implemented in a form of a software product. The computer software product is stored in a readable storage medium, and includes several instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
obtaining, by a first communication apparatus, first data;
processing, by the first communication apparatus, the first data based on a first parameter to obtain a first transmission symbol, wherein the first parameter is determined based on first accuracy and first channel information, the first channel information is information about a channel between the first communication apparatus and a second communication apparatus, and the first accuracy indicates accuracy of processing data by a neural network in the second communication apparatus; and
sending, by the first communication apparatus, the first transmission symbol to the second communication apparatus.

2. The method according to claim 1, wherein
the first parameter comprises a first transform coefficient, the first transform coefficient indicates a dimension ratio of the first data to the first transmission symbol, and the processing, by the first communication apparatus, the first data based on a first parameter comprises:
transforming, by the first communication apparatus, the first data based on the first transform coefficient, to obtain the first transmission symbol; or
the first parameter comprises a first modulation order and a first code rate, and the processing, by the first communication apparatus, the first data based on a first parameter comprises:
encoding and modulating, by the first communication apparatus, the first data based on the first modulation order and the first code rate, to obtain the first transmission symbol.

3. The method according to claim 1 or 2, wherein the method further comprises:
sending, by the first communication apparatus, a first request message to the second communication apparatus, wherein the first request message is for requesting the neural network to perform data processing, the first request message comprises first indication information, and the first indication information indicates the first accuracy; and
receiving, by the first communication apparatus, a first response message from the second communication apparatus, wherein the first response message comprises second indication information, and the second indication information indicates the first parameter.

4. The method according to claim 1 or 2, wherein the method further comprises:
receiving, by the first communication apparatus, a second request message from the second communication apparatus, wherein the second request message is for requesting data, the second request message comprises third indication information, and the third indication information indicates the first parameter.

5. The method according to any one of claims 1 to 4, wherein the method further comprises:
receiving, by the first communication apparatus, a feedback message from the second communication apparatus, wherein the feedback message comprises information indicating a processing result; or
receiving, by the first communication apparatus, retransmission indication information from the second communication apparatus, wherein the retransmission indication information indicates to retransmit the first data.

6. The method according to any one of claims 3 to 5, wherein one or more pieces of the following information are carried on a neural network processing control channel:
the first indication information, the second indication information, the third indication information, or the retransmission indication information.

7. The method according to any one of claims 1 to 6, wherein the first transmission symbol is carried on a neural network processing shared channel.

8. The method according to claim 5, wherein the retransmission indication information further indicates a second parameter, and the second parameter is a parameter obtained through updating of the first parameter.

9. The method according to any one of claims 1 to 8, wherein the first accuracy is represented by any one or more of the following: a confidence of the processing result of the neural network, classification precision of the processing result of the neural network, a mean squared error MSE between input data of the neural network and the first data, and a mean absolute error MAE between the input data of the neural network and the first data.

10. A data processing method, wherein the method comprises:
receiving, by a second communication apparatus, a first transmission symbol from a first communication apparatus;
processing, by the second communication apparatus, the first transmission symbol based on a first parameter to obtain an input of a neural network, wherein the first parameter is determined based on first accuracy and first channel information, the first channel information is information about a channel between the first communication apparatus and the second communication apparatus, and the first accuracy indicates accuracy of processing data by the neural network; and
processing, by the second communication apparatus, the input by using the neural network, to obtain a processing result.

11. The method according to claim 10, wherein
the first parameter comprises a first transform coefficient, the first transform coefficient indicates a dimension ratio of first data to the first transmission symbol, and the processing, by the second communication apparatus, the first transmission symbol based on a first parameter to obtain an input of a neural network comprises:
performing, by the second communication apparatus, inverse transformation on the first transmission symbol based on the first transform coefficient, to obtain the input of the neural network; or
the first parameter comprises a first modulation order and a first code rate, and the processing, by the second communication apparatus, the first transmission symbol based on a first parameter to obtain an input of a neural network comprises:
demodulating and decoding, by the second communication apparatus, the first transmission symbol based on the first modulation order and the first code rate, to obtain the input of the neural network.

12. The method according to claim 10 or 11, wherein the method further comprises:
receiving, by the second communication apparatus, a first request message from the first communication apparatus, wherein the first request message is for requesting neural network processing, the first request message comprises first indication information, and the first indication information indicates the first accuracy; and
sending, by the second communication apparatus, a first response message to the first communication apparatus, wherein the first response message comprises second indication information, and the second indication information indicates the first parameter.

13. The method according to claim 10 or 11, wherein the method further comprises:
sending, by the second communication apparatus, a second request message to the first communication apparatus, wherein the second request message is for requesting data, the second request message comprises third indication information, and the third indication information indicates the first parameter.

14. The method according to any one of claims 10 to 13, wherein the method further comprises:
when second accuracy of the processing result of the input meets a preset condition, sending, by the second communication apparatus, a feedback message to the first communication apparatus, wherein the feedback message comprises information indicating the processing result; or
when second accuracy of the processing result of the input does not meet a preset condition, sending, by the second communication apparatus, retransmission indication information to the first communication apparatus, wherein the retransmission indication information indicates to retransmit the first data, and the first transmission symbol is obtained based on the first data.

15. The method according to any one of claims 10 to 14, wherein one or more pieces of the following information are carried on a neural network processing control channel:
the first indication information, the second indication information, the third indication information, or the retransmission indication information.

16. The method according to any one of claims 10 to 15, wherein the first transmission symbol is carried on a neural network processing shared channel.

17. The method according to claim 14, wherein the retransmission indication information further indicates a second parameter, and the second parameter is a parameter obtained through updating of the first parameter.

18. The method according to any one of claims 10 to 17, wherein the first accuracy is represented by any one or more of the following: a confidence of the processing result of the neural network, classification precision of the processing result of the neural network, a mean squared error MSE between input data of the neural network and the first data, and a mean absolute error MAE between the input data of the neural network and the first data.

19. A first communication apparatus, wherein the apparatus comprises:
a processing unit, configured to: obtain first data, and process the first data based on a first parameter to obtain a first transmission symbol, wherein the first parameter is determined based on first accuracy and first channel information, the first channel information is information about a channel between the first communication apparatus and a second communication apparatus, and the first accuracy indicates accuracy of processing data by a neural network in the second communication apparatus; and
a transceiver unit, configured to send the first transmission symbol to the second communication apparatus.

20. The apparatus according to claim 19, wherein the first parameter comprises a first transform coefficient, the first transform coefficient indicates a dimension ratio of the first data to the first transmission symbol, and the processing unit is specifically configured to transform the first data based on the first transform coefficient, to obtain the first transmission symbol; or
the first parameter comprises a first modulation order and a first code rate, and the processing unit is specifically configured to encode and modulate the first data based on the first modulation order and the first code rate, to obtain the first transmission symbol.

21. The apparatus according to claim 19 or 20, wherein
the transceiver unit is further configured to send a first request message to the second communication apparatus, wherein the first request message is for requesting the neural network to perform data processing, the first request message comprises first indication information, and the first indication information indicates the first accuracy; and is further configured to receive a first response message from the second communication apparatus, wherein the first response message comprises second indication information, and the second indication information indicates the first parameter.

22. The apparatus according to claim 19 or 20, wherein
the transceiver unit is further configured to receive a second request message from the second communication apparatus, wherein the second request message is for requesting data, the second request message comprises third indication information, and the third indication information indicates the first parameter.

23. The apparatus according to any one of claims 19 to 22, wherein
the transceiver unit is further configured to receive a feedback message from the second communication apparatus, wherein the feedback message comprises information indicating a processing result; or
the transceiver unit is further configured to receive retransmission indication information from the second communication apparatus, wherein the retransmission indication information indicates to retransmit the first data.

24. The apparatus according to any one of claims 21 to 23, wherein one or more pieces of the following information are carried on a neural network processing control channel:
the first indication information, the second indication information, the third indication information, or the retransmission indication information.

25. The apparatus according to any one of claims 19 to 24, wherein the first transmission symbol is carried on a neural network processing shared channel.

26. The apparatus according to claim 23, wherein the retransmission indication information further indicates a second parameter, and the second parameter is a parameter obtained through updating of the first parameter.

27. The apparatus according to any one of claims 19 to 26, wherein the first accuracy is represented by any one or more of the following: a confidence of the processing result of the neural network, classification precision of the processing result of the neural network, a mean squared error MSE between input data of the neural network and the first data, and a mean absolute error MAE between the input data of the neural network and the first data.

28. A second communication apparatus, wherein the apparatus comprises:
a transceiver unit, configured to receive a first transmission symbol from a first communication apparatus; and
a processing unit, configured to process the first transmission symbol based on a first parameter to obtain an input of a neural network, wherein the first parameter is determined based on first accuracy and first channel information, the first channel information is information about a channel between the first communication apparatus and the second communication apparatus, and the first accuracy indicates accuracy of processing data by the neural network, wherein
the processing unit is further configured to process the input by using the neural network, to obtain a processing result.

29. The apparatus according to claim 28, wherein the first parameter comprises a first transform coefficient, the first transform coefficient indicates a dimension ratio of first data to the first transmission symbol, and the processing unit is specifically configured to perform inverse transformation on the first transmission symbol based on the first transform coefficient, to obtain the input of the neural network; or
the first parameter comprises a first modulation order and a first code rate, and the processing unit is specifically configured to demodulate and decode the first transmission symbol based on the first modulation order and the first code rate, to obtain the input of the neural network.

30. The apparatus according to claim 28 or 29, wherein
the transceiver unit is further configured to: receive a first request message from the first communication apparatus, wherein the first request message is for requesting neural network processing, the first request message comprises first indication information, and the first indication information indicates the first accuracy; and send a first response message to the first communication apparatus, wherein the first response message comprises second indication information, and the second indication information indicates the first parameter.

31. The apparatus according to claim 28 or 29, wherein
the transceiver unit is further configured to send a second request message to the first communication apparatus, wherein the second request message is for requesting data, the second request message comprises third indication information, and the third indication information indicates the first parameter.

32. The apparatus according to any one of claims 28 to 31, wherein
the transceiver unit is further configured to: when second accuracy of the processing result of the input meets a preset condition, send a feedback message to the first communication apparatus, wherein the feedback message comprises information indicating the processing result; or
the transceiver unit is further configured to: when second accuracy of the processing result of the input does not meet a preset condition, send retransmission indication information to the first communication apparatus, wherein the retransmission indication information indicates to retransmit the first data, and the first transmission symbol is obtained based on the first data.

33. The apparatus according to any one of claims 28 to 32, wherein one or more pieces of the following information are carried on a neural network processing control channel:
the first indication information, the second indication information, the third indication information, or the retransmission indication information.

34. The apparatus according to any one of claims 28 to 33, wherein the first transmission symbol is carried on a neural network processing shared channel.

35. The apparatus according to claim 32, wherein the retransmission indication information further indicates a second parameter, and the second parameter is a parameter obtained through updating of the first parameter.

36. The apparatus according to any one of claims 19 to 35, wherein the first accuracy is represented by any one or more of the following: a confidence of the processing result of the neural network, classification precision of the processing result of the neural network, a mean squared error MSE between input data of the neural network and the first data, and a mean absolute error MAE between the input data of the neural network and the first data.

37. A communication apparatus, comprising a processor, wherein the processor is configured to execute computer instructions, so that the method according to any one of claims 1 to 9 is performed, or the method according to any one of claims 10 to 18 is performed.

38. A communication apparatus, comprising a processor and a memory, wherein
the processor is configured to store computer-executable instructions; and
the processor is configured to execute the computer-executable instructions, so that the method according to any one of claims 1 to 9 is performed; or
the processor is configured to execute the computer-executable instructions, so that the method according to any one of claims 10 to 18 is performed.

39. A communication apparatus, comprising a processor and a transceiver, wherein
the transceiver is configured to receive a signal or send a signal; and
the processor is configured to perform the method according to any one of claims 1 to 9, or is configured to perform the method according to any one of claims 10 to 18.

40. A communication apparatus, comprising a logic circuit and an interface, wherein the logic circuit is coupled to the interface, wherein
the interface is configured to input first data, the logic circuit is configured to process the first data according to the method according to any one of claims 1 to 9, to obtain a first transmission symbol, and the interface is further configured to output the first transmission symbol; or
the interface is configured to input a first transmission symbol, and the logic circuit is configured to process the first transmission symbol according to the method according to any one of claims 10 to 18, to obtain a processing result.

41. A computer-readable storage medium, wherein the computer-readable storage medium is configured to store a computer program, and when the computer program is executed, the method according to any one of claims 1 to 9 is performed; or when the computer program is executed, the method according to any one of claims 10 to 18 is performed.

42. A computer program product comprising instructions, wherein when the instructions are run on a computer, the method according to any one of claims 1 to 9 is performed, or the method according to any one of claims 10 to 18 is performed.

43. A computer program, wherein when the computer program is run, the method according to any one of claims 1 to 9 is performed, or the method according to any one of claims 10 to 18 is performed.

44. A communication system, wherein the system comprises a first communication apparatus and a second communication apparatus, the first communication apparatus is configured to perform the method according to any one of claims 1 to 9, and the second communication apparatus is configured to perform the method according to any one of claims 10 to 18.
